(19) **Europäisches Patentamt / European Patent Office / Office européen des brevets**

(11) **EP 4 554 989 B1**

(12) **EUROPÄISCHE PATENTSCHRIFT**

(45) Veröffentlichungstag und Bekanntmachung des Hinweises auf die Patenterteilung:
**18.02.2026 Patentblatt 2026/08**

(21) Anmeldenummer: **23741411.5**

(22) Anmeldetag: **13.07.2023**

(51) Internationale Patentklassifikation (IPC):
**C08F 265/04** *(2006.01)* **C08F 279/04** *(2006.01)*
**C08F 285/00** *(2006.01)* **C08L 51/04** *(2006.01)*
**C08L 55/02** *(2006.01)*

(52) Gemeinsame Patentklassifikation (CPC):
(C-Sets verfügbar)
**C08F 279/04; C08F 265/04; C08F 285/00;**
C08L 25/12 (Forts.)

(86) Internationale Anmeldenummer:
**PCT/EP2023/069473**

(87) Internationale Veröffentlichungsnummer:
**WO 2024/013294 (18.01.2024 Gazette 2024/03)**

(54) **VERFAHREN ZUR HERSTELLUNG VON ASA- ODER ABS-PFROPFCOPOLYMEREN MIT VERMINDERTER VERFÄRBUNG**

METHOD FOR PRODUCING ASA OR ABS GRAFT COPOLYMERS WITH REDUCED DISCOLORATION

PROCÉDÉ DE PRODUCTION DE COPOLYMÈRES GREFFÉS ASA OU ABS À DÉCOLORATION RÉDUITE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **15.07.2022 EP 22185159**

(43) Veröffentlichungstag der Anmeldung:
**21.05.2025 Patentblatt 2025/21**

(73) Patentinhaber: **INEOS Styrolution Group GmbH 60325 Frankfurt (DE)**

(72) Erfinder:
• **WISSING, Maren 48145 Münster (DE)**

• **FISCHER, Wolfgang 69124 Heidelberg (DE)**
• **KLAUCK, Felix 28039 Madrid (ES)**
• **RUTHARD, Christian 55122 Mainz (DE)**

(74) Vertreter: **Jacobi, Markus Alexander Patentanwälte Isenbruck Bösl Hörschler PartG mbB Eastsite One Seckenheimer Landstrasse 4 68163 Mannheim (DE)**

(56) Entgegenhaltungen:
WO-A1-03/010214 WO-A1-2015/078751
WO-A1-2015/165810 WO-A1-2017/198593

(52) Gemeinsame Patentklassifikation (CPC): (Forts.)

    C-Sets
    **C08F 265/04, C08F 212/08;**
    **C08F 265/04, C08F 212/08, C08F 220/44;**
    **C08F 279/04, C08F 212/08;**

**C08F 279/04, C08F 212/08, C08F 220/44;**
**C08F 285/00, C08F 212/08;**
**C08F 285/00, C08F 212/08, C08F 220/44;**
C08F 285/00, C08F 220/14;
C08L 25/12, C08L 51/04;
C08L 25/12, C08L 55/02

**Beschreibung**

Die vorliegende Erfindung betrifft ein Verfahren zur Herstellung von Pfropfcopolymeren mit verminderter Verfärbung, insbesondere verminderter Gelbfärbung, auf der Basis von Acrylnitril-Styrol-Acrylat (ASA)- oder Acrylnitril-Butadien-Styrol (ABS)-Pfropfcopolymeren, sowie nach diesem Verfahren erhaltene Pfropfcopolymere. Weiterhin betrifft die Erfindung ein Verfahren zur Herstellung einer thermoplastischen Formmasse, enthaltend nach dem erfindungsgemäßen Verfahren erhaltene ABS- oder ASA-Pfropfcopolymere, sowie dadurch erhaltene Formmassen.

ABS-Copolymere und ASA-Copolymere werden bereits seit Jahrzehnten in großen Mengen als thermoplastische Formmassen für die Herstellung von Formteilen verschiedener Art eingesetzt. Es ist bekannt, dass Styrol-Acrylnitril (SAN)- und/oder α-Methylstyrol-Acrylnitril (AMSAN)-Copolymere durch Einarbeitung eines oder mehrerer Pfropfkautschuke (im Folgenden auch Pfropfcopolymere genannt), wie z. B. gepfropfte Polybutadien-Kautschuke oder gepfropfte, vernetzte Polyacrylate, zur Verbesserung der Schlagzähigkeit modifiziert werden können. Diese schlagzähmodifizierten SAN-Formmassen können durch Polymerisation von Styrol und Acrylnitril in Gegenwart von z.B. einem Polybutadien-Kautschuk und/oder durch anschließendes Mischen eines Pfropfcopolymers mit einer separat hergestellten Styrol-Acrylnitril-Matrix hergestellt werden.

Die Eigenschaftsprofile der Formmassen und der daraus hergestellten Formteile können sehr unterschiedlich ausfallen. Besonders wichtige Eigenschaften von ABS- und ASA-Formmassen sind vorteilhafte mechanische Eigenschaften, wie hohe Zähigkeit und Schlagzähigkeit, gute Verarbeitbarkeit, relativ hohe Wärmebeständigkeit, sowie eine helle Grundfarbe (niedriger Gelbwert), damit das Material in einem breiten Farbspektrum eingefärbt werden kann.

Typischerweise werden die Pfropfkautschuk-Copolymere hergestellt, indem vernetzte Polyacrylat-Latices oder Polybutadien-Latices als Pfropfgrundlagen durch Emulsionspolymerisation hergestellt werden und anschließend eine oder mehrere Pfropfschalen durch Aufpfropfen einer Mischung aus z.B. Styrol und Acrylnitril und gegebenenfalls weiteren Monomeren durch Pfropfemulsionspolymerisation hergestellt werden. Nach der Emulsionspolymerisation wird der Pfropfcopolymer-Latex in der Regel ausgefällt, von der Suspension, abgetrennt, gewaschen und getrocknet (z.B. WO 2015/078751).

In WO 2015/000873 werden Pfropfcopolymer-Latices beschrieben, bei denen auf den Fällungsschritt ein Sinterschritt folgt, bei dem der ausgefällte Pfropfcopolymer-Latex, insbesondere ein ABS-Pfropfcopolymer-Latex, bei einer Temperatur von 100° bis 125°C zu größeren Partikeln agglomeriert wird.

Verfahren zur Herstellung von ASA- oder ABS-Pfropfcopolymeren umfassend einen Fällungs- und einen Sinterschritt werden ferner in WO 2020/043690 und WO 2020/020869 beschrieben. In einem ersten Schritt wird der Pfropfcopolymer-Latex mit der Fällungslösung bei einer Temperatur T1 (Fällungstemperatur) im Bereich von 30 bis 80 °C vermischt, und danach wird in einem zweiten Schritt die Fällungsmischung auf einer Temperatur T2 (Sintertemperatur) im Bereich von 70 bis 140 °C für einen Zeitraum von vorzugsweise 2 bis 90 Minuten gehalten.

Beispielhaft wird die Herstellung von ASA-Pfropfcopolymere mit 1 oder 2 Pfropfschalen beschrieben. Letztere werden durch Pfropfemulsionspolymerisation in 2 Stufen erhalten, wobei zunächst auf einen vernetzten Polybutylacrylatkautschuk-Latex Styrol gepfropft, und dann auf diese erste Pfropfschale eine Mischung aus Styrol und Acrylnitril gepfropft wird. Nach Beendigung der Monomerzugabe wird bei 65°C für 60 Minuten nachpolymerisiert. Der erhaltene ASA-Pfropfcopolymer-Latex (Dw 500 nm) wird dann bei 60°C bzw. 70°C mit Hilfe von $MgSO_4$ gefällt und danach bei 92°C bzw. 130°C 5 Minuten gesintert.

WO 2020/020831 offenbart ebenfalls ASA-Pfropfcopolymere, die eine aus zwei Schichten bestehende Styrol-Acrylnitril-Copolymer-Pfropfhülle aufweisen, wobei die erste Schicht durch Emulsionspolymerisation von Styrol auf einen Polyacrylat-Latex gebildet wurde, und auf den mit Polystyrol gepfropften Latex, die zweite Schicht - erhalten durch Emulsionspolymerisation von Styrol und Acrylnitril - gepfropft ist. Die Aufarbeitung der erhaltenen Pfropfcopolymere erfolgte durch Fällung bei 88°C, kurzem Erhitzen auf 99°C, Filtration, Waschen und Trocknung.

Von Nachteil ist, dass die nach den Verfahren gemäß dem Stand der Technik erhaltenen Pfropfcopolymere nach dem Sinterschritt Verfärbungen, insbesondere gelbliche bis rötliche Verfärbungen, d.h. einen hohen Gelbwert, aufweisen.

In WO 03/010214 wird die Herstellung von ABS-Pfropfcopolymeren mit geringem Styrol- und Acrylnitril-Restmonomergehalt durch Emulsionspolymerisation beschrieben, wobei zu einer Dienkautschuk-Grundlage ein Gemisch von Styrol und Acrylnitril gegeben und bis zu einem Umsatz von 95% polymerisiert wird, und dann ein drittes Monomer (Siedepunkt < 120°C), bevorzugt Methylmethacrylat, zugegeben und polymerisiert wird.

Die Temperaturen bei der Polymerisation, Nachpolymerisation und Fällung betragen max. 93°C. Nach der Fällung erfolgt die Isolierung und Trocknung. Ein Sinterschritt ist nicht vorhanden.

WO 2015/7165810 A1 beschreibt ein Verfahren zum Herstellen von Styrol-Pfropfcopolymeren mit optimiertem Restmonomeranteil, sowie dadurch hergestellte Pfropfcopolymere und diese enthaltende Formmassen. Das Verfahren umfasst (i) das Bereitstellen und Agglomerieren der in einer Emulsion vorliegenden Pfropfgrundlage B; (ii) das Zugeben von Styrol-Monomeren A1 und Vinylcyanid-Monomeren A2 zu der Pfropfgrundlage B über einen definierten Zeitraum der Monomerenzugabe; und (iii) das gleichzeitige Pfropf-Copolymerisieren der zugegebenen Styrol-Monomere A1 und der Vinylcyanid-Monomere A2 auf die agglomerierte Pfropfgrundlage B, wobei Schritt (ii) das Masseverhältnis von Styrol-Monomeren A1 zu Vinylcyanid-Monomeren A2 der Monomerenzugabe am Ende des Zeitraums der Monomerenzugabe niedriger ist als das Masseverhältnis der Komponenten der Monomerenzugabe über den gesamten Zeitraum der Monomerenzugabe integriert.

Bekannte ASA- und ABS-Pfropfcopolymere haben oftmals einen zu hohen Acrylnitril-Restmonomergehalt, der den heutigen Anforderungen auf dem Markt nicht genügt, da Acrylnitril gesundheitlich bedenklich ist und einen unangenehmen Geruch aufweist.

Eine Aufgabe der vorliegenden Erfindung ist es, ein Verfahren zur Herstellung von ASA- oder ABS-Pfropfcopolymere bereitzustellen, mit dem es gelingt, ASA- oder ABS-Pfropfcopolymere zu erhalten, die einen geringen Acrylnitril-Restmonomer-Gehalt aufweisen. Ferner sollen die ASA- oder ABS-Pfropfcopolymere nach einer Sinterung keine oder zumindest nur geringe Verfärbungen, und somit eine weiße oder nahezu weiße Farbe, d.h. einen niedrigen Gelbwert (Yellowness-Index YI) aufweisen.

Es hat sich nun überraschend gezeigt, dass der Acrylnitril-Restmonomergehalt von ASA- oder ABS-Pfropfcopolymeren deutlich gesenkt werden kann, und weniger verfärbte Pfropfkautschuke nach der Sinterung erhalten werden, wenn man bei der Herstellung der Pfropfhülle im Anschluss an die simultane Zugabe von Vinylaromat- und Nitrilmonomer, weiteres Vinylaromat-Monomer zugibt und man das erhaltene Reaktionsgemisch aus Kautschuk-Pfropfgrundlage und zugeführten Monomeren polymerisieren lässt.

Ein Gegenstand der Erfindung ist ein Verfahren zur Herstellung mindestens eines Pfropfcopolymers B enthaltend (bevorzugt bestehend aus):

B1: 40 bis 90 Gew.-%, bevorzugt 45 bis 85 Gew.-%, besonders bevorzugt 50 bis 70 Gew.-%, bezogen auf das Pfropfcopolymer B, mindestens einer, bevorzugt einer, Pfropfgrundlage B1, erhalten durch Emulsionspolymerisation von:

B11 50 bis 100 Gew.-%, bevorzugt 80 bis 100 Gew.-%, besonders bevorzugt 90 bis 99,9 Gew.-%, bezogen auf die Pfropfgrundlage B1, mindestens eines Monomers B11 ausgewählt aus $C_1$-$C_8$-Alkyl(meth)acrylat, bevorzugt n-Butylacrylat, und Butadien;

B12 0 bis 10 Gew.-%, bevorzugt 0 bis 5 Gew.-%, oftmals 0,1 bis 5 Gew.-%, besonders bevorzugt 0 bis 2,5 Gew.-%, oftmals 1 bis 2,5 Gew.- %, bezogen auf die Pfropfgrundlage B1, mindestens eines mehrfunktionellen Vernetzungsmonomers B12, vorzugsweise ausgewählt aus Allyl(meth)acrylat, Divinylbenzol, Diallylmaleat, Diallylfumarat, Diallylphthalat, Triallylcyanurat, Triallylisocyanurat und Dihydrodicyclopentadienylacrylat (DCPA);

B13 0 bis 50 Gew.-%, bevorzugt 0 bis 20 Gew.-%, besonders bevorzugt 0 bis 10 Gew.-%, bezogen auf die Pfropfgrundlage B1, mindestens eines weiteren Monomers B13 ausgewählt aus Styrol, alpha-Methylstyrol, $C_1$-$C_4$-Alkylstyrol, Acrylnitril, Methacrylnitril, Isopren, Chloropren, Methylmethacrylat, Alkylenglykoldi(meth)acrylat und Vinylmethylether;

wobei die Summe von B11, B12 und B13 100 Gew.-% ist; und

B2: 10 bis 60 Gew.-%, bevorzugt 15 bis 55 Gew.-%, besonders bevorzugt 30 bis 50 Gew.-%, bezogen auf das Pfropfcopolymer B, mindestens einer, bevorzugt einer oder zwei, besonders bevorzugt zwei, Pfropfhülle(n) B2, die - in Gegenwart der mindestens einen Pfropfgrundlage B1 - erhalten wird durch Emulsionspolymerisation von:

B21 50 bis 100 Gew.-%, bevorzugt 50 bis 95 Gew.-%, besonders bevorzugt 65 bis 85 Gew.-%, ganz besonders bevorzugt 70 bis 85 Gew.-%, bezogen auf die Pfropfhülle B2, mindestens eines vinylaromatischen Monomeren B21, ausgewählt aus Styrol und alpha-Methylstyrol; und

B22 0 bis 50 Gew.-%, bevorzugt 5 bis 50 Gew.-%, besonders bevorzugt 15 bis 35 Gew.-%, ganz besonders bevorzugt 15 bis 30 Gew.-%, bezogen auf die Pfropfhülle B2, mindestens eines Monomers B22 ausgewählt aus Acrylnitril oder Mischungen aus Acrylnitril und mindestens einem weiteren Monomer ausgewählt aus Methacrylnitril, Acrylamid, Vinylmethylether, Anhydriden ungesättigter Carbonsäuren (z.B. Maleinsäureanhydrid oder Phthalsäureanhydrid) und Imiden ungesättigter Carbonsäuren (z.B. N-substituiertes Maleimid wie N-Cyclohexylmaleimid oder N-Phenylmaleimid);

wobei die Summe von B21 und B22 100 Gew.-% ist; und

wobei mindestens eine Pfropfhülle B2 durch Emulsionspolymerisation von 50 bis 95 Gew.-%, bevorzugt 65 bis 85 Gew.-%, besonders bevorzugt 70 bis 85 Gew.-%, mindestens eines Monomers B21 und 5 bis 50 Gew.-%, bevorzugt 15 bis 35 Gew.- %, besonders bevorzugt 15 bis 30 Gew.-%, mindestens eines Monomers B22 erhalten wird;

wobei die Summe der mindestens einen Pfropfgrundlage B1 und der mindestens einen Pfropfhülle B2 100 Gew.-% ergibt; und wobei

das Verfahren die folgenden Schritte umfasst:

a) Herstellung eines Latex mindestens eines Pfropfcopolymers B umfassend:

a1) Vorlage eines wässrigen Latex enthaltend mindestens eine, bevorzugt eine, Pfropfgrundlage B1;
a2) gegebenenfalls Herstellung einer ersten Pfropfhülle B2 bzw. B2' durch:

a2-1) Zugabe und Emulsionspolymerisation eines ersten Teils - bezogen auf die Gesamtmenge B21 - des mindestens einen Monomers B21 bzw. B21', bevorzugt Styrol, zu der Pfropfgrundlage B1;
a2-2) Nachpolymerisation des in a2-1) erhaltenen Latex;

a3) Herstellung einer ersten Pfropfhülle B2 oder, falls die Schritte a2-1) und a2-2 vorhanden sind, Herstellung einer zweiten Pfropfhülle B2 bzw. B2" durch:

a3-1) simultane Zugabe und Emulsionspolymerisation eines ersten oder weiteren Teils des mindestens einen Monomers B21 bzw. B21" - bezogen auf die Gesamtmenge B21 - und der Gesamtmenge des mindestens einen Monomers B22 bzw. B22" zu dem Latex aus Schritt a1) bzw. a2-2);
a3-2) unmittelbar nach Beendigung der Zugabe der Monomere in Schritt a3-1), Zugabe und Emulsionspolymerisation des restlichen Teils des mindestens einen Monomers B21 bzw. B21" - bezogen auf die Gesamtmenge B21 - zu dem in Schritt a3-1) erhaltenen Latex;
a3-3) Nachpolymerisation des in Schritt 3-2) erhaltenen Latex des Pfropfcopolymers B, bevorzugt für mindestens 15 Minuten.

Das erfindungsgemäße Verfahren wie zuvor beschrieben kann ferner einen oder mehrere der folgenden Schritte b) bis g) (in der genannten Reihenfolge) umfassen:

b) Fällung des in Schritt a) erhaltenen Pfropfcopolymer-B-Latex bei einer Temperatur von 30 bis 95°C, bevorzugt 40 bis 90°C, besonders bevorzugt 50 bis 90°C, ganz besonders bevorzugt 60 bis 88°C, wobei der Pfropfcopolymer-B-Latex mit mindestens einer Fällungslösung PS gemischt wird, wodurch eine Fällungsmischung entsteht;

c) Sinterung der in Schritt b) erhaltenen Fällungsmischung bei einer Temperatur von 85 bis 150°C, vorzugsweise 90 bis 145°C, insbesondere 90 bis 140°C, ganz besonders bevorzugt 92 bis 135°C, bevorzugt für 15 bis 90 Minuten, besonders bevorzugt 15 bis 75 Minuten, insbesondere 20 bis 60 Minuten, wobei die Temperatur in Schritt c) mindestens 5°C, bevorzugt mindestens 10°C, besonders bevorzugt 15°C, höher ist als in Schritt b);

d) gegebenenfalls Abkühlen der gesinterten Fällungsmischung aus Schritt c), vorzugsweise auf eine Temperatur von 20 bis 90°C;

e) mechanische Entwässerung der in Schritt c) oder d) erhaltenen gesinterten Fällungsmischung, wobei ein Pfropfcopolymer B mit einem Wassergehalt gleich oder kleiner 50 Gew.-%, vorzugsweise gleich oder kleiner 40 Gew.-%, besonders bevorzugt 10 bis 35 Gew.-%, jeweils bezogen auf das feuchte Pfropfcopolymer B, erhalten wird;

f) gegebenenfalls Waschen des Pfropfcopolymers B, erhalten in Schritt e);

g) gegebenenfalls Trocknen des in Schritt e) oder f) erhaltenen Pfropfcopolymers B.

Bevorzugt ist ein erfindungsgemäßes Verfahren wie vorstehend beschrieben, umfassend die Schritte a), b), c) und e), sowie optional die Schritte d), f) und/oder g).

Unter einem ‚Latex' ist eine Polymerdispersion zu verstehen, also ein Gemisch aus Polymerteilchen und einer wässrigen Flüssigkeit.

Pfropfcopolymer B

Vorzugsweise ist das Pfropfcopolymer B ausgewählt aus ASA-Pfropfcopolymeren und ABS-Pfropfcopolymeren, besonders bevorzugt sind ASA-Pfropfcopolymere.

ASA-Pfropfcopolymere enthalten typischerweise als Pfropfgrundlage B1 einen vernetzten Polyalkyl(meth)acrylatkautschuk, insbesondere eine vernetzte Polybutylacrylat-Pfropfgrundlage B1.

ABS-Pfropfcopolymere enthalten üblicherweise als Pfropfgrundlage B1 einen oder mehrere Polybutadienkautschuke und/oder einen oder mehrere Styrol-Butadien-Kautschuke.

Typischerweise besteht die Pfropfgrundlage B1 aus einem Polymer, vorzugsweise einem zumindest teilweise vernetzten Polymer, mit einer Glasübergangstemperatur (Tg) unter 0°C, vorzugsweise unter -20°C, besonders bevorzugt unter -40°C, wobei die Glasübergangstemperatur $T_g$ durch dynamisch-mechanische Analyse (DMA) unter Verwendung einer Frequenz von 1 Hz gemessen wird.

Die mindestens eine Pfropfhülle B2 besteht typischerweise aus Monomeren, die zu einem Polymer mit einer Glasübergangstemperatur von mehr als +20°C, vorzugsweise mehr als +60°C, copolymerisieren.

Bevorzugte Monomere der Pfropfhülle B2 (Monomere B21 und B22) sind Styrol und/oder (alpha)-Methylstyrol und (Meth)acrylnitril, insbesondere Styrol und Acrylnitril, sowie gegebenenfalls Methyl(meth)acrylat, Ethylacrylat, N-Phenylmaleinsäureimid und Maleinsäureanhydrid.

Bevorzugte Monomere B11 zur Herstellung der Pfropfgrundlage B1 sind Butadien, Alkylacrylate und/oder Alkylmethacrylat (auch als Alkyl(meth)acrylate bezeichnet) mit 1 bis 8, bevorzugt 4 bis 8, Kohlenstoffatomen in der Alkylgruppe.

Vorzugsweise ist das Monomer B11 mindestens ein Monomer ausgewählt aus $C_4$-$C_8$-Alkylacrylaten, bevorzugt ausgewählt aus Butylacrylat, Ethylhexylacrylat und Cyclohexylacrylat.

Häufig werden als Monomer B11 n-Butylacrylat und/oder 2-Ethylhexylacrylat eingesetzt, besonders bevorzugt ist n-Butylacrylat allein oder in Mischung mit anderen Monomeren B11.

Um eine Vernetzung der $C_1$-$C_8$-Alkyl(meth)acrylat-Monomere B11 und damit eine Vernetzung der Pfropfgrundlage B1 zu erreichen, werden die Monomere B11 in Gegenwart von 0,1 bis 10 Gew.-%, bevorzugt 0,1 bis 5 Gew.-%, besonders bevorzugt 0,5 bis 4 Gew.-%, ganz besonders bevorzugt 1 bis 3 Gew.-%, insbesondere 1 bis 2,5 Gew.-%, bezogen auf die Pfropfgrundlage B1, eines oder mehrerer polyfunktioneller, vernetzender Monomer(e) B12, polymerisiert.

Geeignete Monomere B12 sind insbesondere polyfunktionelle, vernetzende Monomere, die mit den genannten Monomeren, insbesondere B11 und B13, copolymerisiert werden können.

Geeignete polyfunktionelle, vernetzende Monomere B12 enthalten zwei oder mehr, bevorzugt zwei oder drei, besonders bevorzugt genau zwei ethylenische Doppelbindungen, die vorzugsweise nicht 1,3-konjugiert sind.

Beispiele für geeignete polyfunktionelle, vernetzende Monomere B12 sind Allyl(meth)acrylat, Divinylbenzol, Diallylester von Carbonsäuren, wie z.B. Diallymaleat, Diallylfumarat und Diallylphthalat. Auch der Acrylsäureester des Tricyclodecenylalkohols (Tricyclodecenylacrylat, Dihydrodicyclopentadienylacrylat, DCPA) - wie in DE-A 1 260 135 beschrieben - stellt ein bevorzugtes polyfunktionelles, vernetzendes Monomer B12 dar.

Insbesondere ist das polyfunktionelle, vernetzende Monomer B12 (das vorzugsweise zum Vernetzen von Polyalkyl(meth)acrylatkautschuk verwendet wird) mindestens ein Monomer, ausgewählt aus Allyl(meth)acrylat (AMA), Divinylbenzol, Diallymaleat, Diallylfumarat, Diallylphthalat , Triallylcyanurat, Triallylisocyanurat und Dihydrodicyclopentadienylacrylat (DCPA), bevorzugt Allyl(meth)acrylat, Divinylbenzol, Diallylmaleat, Diallylfumarat, Diallylphthalat und DCPA, bevorzugt aus Allyl(meth)acrylat und DCPA.

In einer bevorzugten Ausführungsform werden 1 bis 2,5 Gew.-%, bevorzugt 1,5 bis 2,2 Gew.-%, bezogen auf die Pfropfgrundlage B1, Dihydrodicyclopentadienylacrylat (DCPA) allein oder in Mischung mit mindestens einem weiteren der oben genannten Monomeren B12 eingesetzt, insbesondere in Mischung mit Allyl(meth)acrylat, als Monomer B12.

Weiterhin kann die mindestens eine Pfropfgrundlage B1 optional ein oder mehrere von B11 und B12 verschiedene copolymerisierbare, monoethylenisch ungesättigte Monomere B13 enthalten.

Monomere B13 können beispielsweise ausgewählt werden aus Styrol, alpha-Methylstyrol, $C_1$-$C_4$-Alkylstyrol, Acrylnitril, Methacrylnitril, Isopren, Chloropren, Methylmethacrylat, Alkylenglykoldi(meth)acrylat und Vinylmethylether.

Vorzugsweise ist das weitere Monomer B13 mindestens ein Monomer ausgewählt aus Styrol, (alpha)-Methylstyrol, Acrylnitril, Methacrylnitril, Methyl(meth)acrylat, Isopren, Chloropren und $C_1$-$C_4$-Alkylstyrol.

In einer bevorzugten Ausführungsform ist das vinylaromatische Monomer Styrol und/oder (alpha)-Methylstyrol und das Monomer B22 ist Acrylnitril oder ein Gemisch aus Acrylnitril und mindestens einem Monomer ausgewählt aus Methacrylnitril, Acrylamid, Vinylmethylether, Maleinsäureanhydrid, Phthalsäureanhydrid, N-Cyclohexylmaleinimid und N-Phenylmaleinimid. Falls B22 ein Gemisch aus Acrylnitril und mindestens einem Monomer ausgewählt aus Methacrylnitril, Acrylamid, Vinylmethylether, Maleinsäureanhydrid, Phthalsäureanhydrid, N-Cyclohexylmaleinimid und N-Phenylmaleinimid ist, beträgt der Anteil an Acrylnitril, bezogen auf die Gesamtmenge B22, mindestens 50 Gew.- %, bevorzugt mindestens 80 Gew.-%, besonders bevorzugt mindestens 90 Gew.-%.

Besonders bevorzugt wird als Monomer B22 Acrylnitril allein eingesetzt.

Besonders bevorzugt sind die zur Emulsionspolymerisation von Pfropfcopolymer B verwendeten Monomere B21 und B22 Mischungen aus Styrol und Acrylnitril mit einem Gewichtsverhältnis von Styrol zu Acrylnitril im Bereich von 95:5 bis 50:50, bevorzugt im Bereich von 90:10 bis 65:35, besonders bevorzugt im Bereich von 85:15 bis 70:30.

In einer bevorzugten Ausführungsform wird die mindestens eine Pfropfgrundlage B1 erhalten durch Emulsionspolymerisation von:

B11: 80 bis 99,9 Gew.-%, bevorzugt 90 bis 99,5 Gew.-%, besonders bevorzugt 90 bis 99,0 Gew.-% bezogen auf die Pfropfgrundlage B1, mindestens eines $C_1$-$C_8$-Alkyl(meth)acrylats, bevorzugt n-Butylacrylat und/oder 2-Ethylhexylacrylat, als Monomer B11;

B12: 0,1 bis 10 Gew.-%, bevorzugt 0,5 bis 4 Gew.-%, besonders bevorzugt 1 bis 2,5 Gew.-%, bezogen auf die Pfropfgrundlage B1, mindestens eines polyfunktionellen Vernetzungsmonomers B12; vorzugsweise ausgewählt aus Allyl(meth)acrylat, Divinylbenzol, Diallylmaleat, Diallylfumarat, Diallylphthalat, Triallylcyanurat, Triallylisocyanurat und Dihydrodicyclopentadienylacrylat (DCPA);

B13: 0 bis 19,9 Gew.-%, vorzugsweise 0 bis 9,5 Gew.-%, besonders bevorzugt 0 bis 9,0 Gew.-%, bezogen auf die Pfropfgrundlage B1, mindestens eines weiteren Monomeren, vorzugsweise ausgewählt aus Styrol, alpha-Methyls-tyrol, $C_1$-$C_4$-Alkylstyrol, Acrylnitril, Methacrylnitril, Isopren, Chloropren, Methylmethacrylat, Alkylenglykol-di(meth)acrylat und Vinylmethylether;

wobei die Summe von B11, B12 und B13 gleich 100 Gew.-% ist.

In einer weiteren bevorzugten Ausführungsform wird die mindestens eine Pfropfgrundlage B1 erhalten durch Emulsionspolymerisation von:

B11: 90 bis 99,9 Gew.-%, bevorzugt 97 bis 99,5 Gew.-%, besonders bevorzugt 97,5 bis 99 Gew.-%, bezogen auf die Pfropfgrundlage B1, mindestens eines $C_1$-$C_8$-Alkyl(meth)acrylats, bevorzugt mindestens eines $C_4$-$C_8$-Alkyl(meth)acrylat, besonders bevorzugt n-Butylacrylat und/oder 2-Ethylhexylacrylat, ganz besonders bevorzugt n-Butylacrylat, als Monomer B11; und

B12: 0,1 bis 10 Gew.-%, bevorzugt 0,5 bis 3 Gew.-%, besonders bevorzugt 1 bis 2,5 Gew.-%, bezogen auf die Pfropfgrundlage B1, mindestens eines mehrfunktionellen, vernetzenden Monomers B12; ausgewählt aus Allyl(meth)acrylat, Divinylbenzol, Diallylmaleat, Diallylfumarat, Diallylphthalat und Dihydrodicyclopentadienylacrylat (DCPA), insbesondere aus Allyl(meth)acrylat und/oder Dihydrodicyclopentadienylacrylat (DCPA);

wobei die Summe von B11 und B12 100 Gew.-% (bezogen auf alle Monomere der Pfropfgrundlage B1) beträgt.

Insbesondere weitere geeignete Zusammensetzungen der Pfropfgrundlage B1, enthaltend die Monomeren B11, B12 und gegebenenfalls B13, sowie das allgemeine Verfahren zu ihrer Herstellung sind beispielsweise in DE-A 28 26 925, DE-A 31 49 358 und DE-A 34 14 118 beschrieben.

In einer bevorzugten Ausführungsform wird die mindestens eine Pfropfhülle B2 durch Emulsionspolymerisation in Gegenwart der mindestens einen Pfropfgrundlage B1 erhalten aus:

B21: 50 bis 95 Gew.-%, bevorzugt 65 bis 90 Gew.-%, besonders bevorzugt 70 bis 85 Gew.-%, bezogen auf die Pfropfhülle B2, mindestens ein vinylaromatisches Monomer B21, wobei das Monomer B21 ausgewählt ist aus Styrol und (alpha)-Methylstyrol, insbesondere Styrol, und

B22: 5 bis 50 Gew.-%, bevorzugt 10 bis 35 Gew.-%, besonders bevorzugt 15 bis 30 Gew.-%, bezogen auf die Pfropfhülle B2, mindestens ein ethylenisch ungesättigtes Monomer B22, wobei das Monomer B22 ausgewählt ist aus Acrylnitril oder Mischungen aus Acrylnitril und mindestens einem weiteren Monomer ausgewählt aus Methacrylnitril, Acrylamid, Vinylmethylether, Anhydriden ungesättigter Carbonsäuren (z.B. Maleinsäureanhydrid, Phthalsäureanhydrid) und Imiden ungesättigter Carbonsäuren (z.B. N-substituiertes Maleimid, wie N-Cyclohexylmaleimid und N-Phenylmaleimid), vorzugsweise ausgewählt aus Acrylnitril oder Gemischen von Acrylnitril und Methacrylnitril.

Insbesondere enthält das Pfropfcopolymer B eine Pfropfgrundlage B1, vorzugsweise einen vernetzten Polyalkyl(meth)acrylatkautschuk wie oben beschrieben, und eine oder mehrere Pfropfhülle(n) B2, insbesondere eine oder zwei, Pfropfhüllen B2, die sich in Auswahl und Menge der Monomeren B21 und B22 unterscheiden und durch stufenweise Pfropf-Emulsionspolymerisation der Monomeren B21 und/oder B22 in Gegenwart von Pfropfgrundlage B1 bzw. in Gegenwart von bereits gepfropfter Pfropfgrundlage basierend auf B1 erhalten werden.

In einer bevorzugten Ausführungsform enthält das Pfropfcopolymer B mindestens eine Pfropfgrundlage B1, bevorzugt einen vernetzten Polybutylacrylatkautschuk wie oben beschrieben, und genau eine Pfropfhülle B2, erhalten durch Emulsionspolymerisation der Monomeren B21 und B22 wie oben beschrieben, insbesondere Styrol und Acrylnitril, in Gegenwart der Pfropfgrundlage B1 (einstufige Pfropfung).

In einer weiteren bevorzugten Ausführungsform enthält das Pfropfcopolymer B mindestens eine Pfropfgrundlage B1, vorzugsweise einen vernetzten Polybutylacrylatkautschuk wie oben beschrieben, und zwei verschiedene Pfropfhüllen B2, bezeichnet als Pfropfhüllen B2' und B2", wobei B2' durch Emulsionspolymerisation des Monomeren B21 (bezeichnet als B21'), insbesondere Styrol, in Gegenwart der Pfropfgrundlage B1 erhalten wird, und die Pfropfhülle B2" durch anschließende Emulsionspolymerisation der Monomeren B21 und B22 (bezeichnet als B21" und B22") wie oben beschrieben, insbesondere Styrol und Acrylnitril, in Gegenwart der mit B2' gepfropften Pfropfgrundlage B1 (zweistufige Pfropfung) erhalten wird.

In einer bevorzugten Ausführungsform (einstufige Pfropfung) enthält das Pfropfcopolymer B:

B1: 50 bis 70 Gew.-%, bevorzugt 55 bis 65 Gew.-%, besonders bevorzugt 58 bis 65 Gew.-%, bezogen auf das Pfropfcopolymer B, mindestens einer, bevorzugt einer, Pfropfgrundlage B1 wie oben beschrieben, wobei die mindestens eine Pfropfgrundlage B1 bevorzugt eine Teilchengröße (insbesondere mittlerer Teilchendurchmesser $D_v$) im Bereich von 50 bis 190 nm, bevorzugt 60 bis 150 nm, besonders bevorzugt 60 bis 100 nm, aufweist;

B2: 30 bis 50 Gew.-%, bevorzugt 35 bis 45 Gew.-%, besonders bevorzugt 35 bis 42 Gew.-%, bezogen auf das Pfropfcopolymer B, einer Pfropfhülle B2, erhalten durch Emulsionspolymerisation in Gegenwart mindestens einer Pfropfgrundlage B1 von:

B21: 50 bis 95 Gew.-%, bevorzugt 65 bis 85 Gew.-%, besonders bevorzugt 70 bis 85 Gew.-%, bezogen auf die Pfropfhülle B2, mindestens eines vinylaromatischen Monomers B21, wobei das Monomer B21 ausgewählt ist aus Styrol und (alpha)-Methylstyrol, insbesondere Styrol; und

B22: 5 bis 50 Gew.-%, bevorzugt 15 bis 35 Gew.-%, besonders bevorzugt 15 bis 30 Gew.-%, bezogen auf die Pfropfhülle B2, mindestens eines ethylenisch ungesättigten Monomers B22, wobei das Monomer B22 ausgewählt ist aus Acrylnitril oder Mischungen aus Acrylnitril und mindestens einem weiteren Monomer ausgewählt aus Methacrylnitril, Acrylamid, Vinylmethylether, Anhydriden ungesättigter Carbonsäuren (zB Maleinsäureanhydrid, Phthalsäureanhydrid) und Imiden ungesättigter Carbonsäuren (z.B. N-substituiertes Maleimid wie N-Cyclohexylmaleimid und N-Phenylmaleimid), vorzugsweise ausgewählt aus Acrylnitril oder Gemischen von Acrylnitril und Methacrylnitril;

wobei die Gesamtsumme aus Pfropfgrundlage B1 und Pfropfhülle B2 100 Gew.-% beträgt und wobei der in Schritt a) erhaltene Latex des Pfropfcopolymers B eine Teilchengröße (insbesondere mittlerer Teilchendurchmesser $D_v$) im Bereich von 60 bis 200 nm, bevorzugt von 80 bis 150 nm, aufweist.

Gemäß einer weiteren Ausführungsform kann bei der zuvor beschriebenen einstufigen Pfropfung die Pfropfgrundlage B1, welche bevorzugt eine Teilchengröße (insbesondere mittlerer Teilchendurchmesser Dv) im Bereich von 80 bis 150 nm, aufweist, durch bekannte Agglomerationsverfahren (z.B. WO 2012/022710 und WO 2014/170406 bzw. WO 2014/170406) agglomeriert werden. Die agglomerierte Pfropfgrundlage B1 wird dann wie zuvor beschrieben mit einer Pfropfhülle B2 gepfropft, wobei der in Schritt a) erhaltene Latex Pfropfcopolymere B mit Teilchengrößen (insbesondere mittlerer Teilchendurchmesser $D_v$) im Bereich von 200 bis 600 nm, bevorzugt 250 bis 500 nm, besonders bevorzugt 300 bis 400 nm, enthält. Der mittels einer agglomerierten Pfropfgrundlage B1 erhaltene Latex ist oftmals bimodal und weist oftmals bimodale Teilchengrößenverteilungen mit Teilchengrößen (insbesondere mittlerer Teilchendurchmesser Dv) im Bereich von 60 bis 200 nm, oftmals 60 bis 150 nm, und 300 bis 600 nm auf.

Typischerweise kann die Teilchengröße von Latices des Pfropfcopolymers B als der volumenmittlere durchschnittliche Teilchendurchmesser Dv-Wert angegeben werden. Der volumenmittlere Teilchendurchmesser Dv (oder der mittlere Teilchendurchmesser nach De Broucker), auch als mittlerer Teilchendurchmesser Dv bezeichnet, ist eine durchschnittliche Größe, bezogen auf das Einheitsvolumen der Teilchen. Beispielsweise kann der volumenmittlere Teilchendurchmesser Dv mittels Lichtstreuung (Laserbeugung) bestimmt werden (z.B. mit einem Gerät von Beckman Coulter).

Weiterhin kann die Partikelgröße als mittlere Partikelgröße $D_{50}$ angegeben werden. Der mittlere Partikeldurchmesser $D_{50}$ stellt den Wert der Partikelgrößenverteilungskurve dar, bei dem 50 Vol.-% der Partikel (z. B. Polyacrylatlatexpartikel) einen Durchmesser kleiner als der $D_{50}$-Wert und die anderen 50 Vol.-% einen Durchmesser größer als der $D_{50}$-Wert haben. In ähnlicher Weise gibt beispielsweise der $D_{90}$-Wert den Partikeldurchmesser an, bei welchem 90 Vol.-% aller Partikel einen kleineren Durchmesser haben.

Gemäß der vorliegenden Erfindung hat die im Zusammenhang mit dem Pfropfcopolymer B genannte Teilchengröße vorzugsweise die Bedeutung des volumenmittleren Teilchendurchmessers Dv, der mittels Lichtstreuung bestimmt wurde.

In einer weiteren bevorzugten Ausführungsform (zweistufige Pfropfung B2' und B2") enthält das Pfropfcopolymer B:

B1: 50 bis 70 Gew.-%, bevorzugt 55 bis 65 Gew.-%, bezogen auf das Pfropfcopolymer B, mindestens einer, bevorzugt genau einer Pfropfgrundlage B1 wie oben beschrieben, wobei bevorzugt die mindestens eine Pfropfgrundlage B1 eine Teilchengröße (insbesondere mittlerer Teilchendurchmesser Dv) im Bereich von 200 bis 700 nm, bevorzugt 300 bis 600 nm, besonders bevorzugt 350 bis 550 nm aufweist;

B2': 5 bis 25 Gew.-%, bevorzugt 5 bis 20 Gew.-%, besonders bevorzugt 5 bis 15 Gew.-%, bezogen auf das Pfropfcopolymer B, mindestens einer Pfropfhülle B2', die durch Emulsionspolymerisation erhalten wird, in Anwesenheit von Pfropfgrundlage B1, von:
B21' 100 Gew.-%, bezogen auf Pfropfhülle B2', mindestens ein vinylaromatisches Monomer B21' ausgewählt aus Styrol und (alpha)-Methylstyrol, insbesondere Styrol; und

B2": 20 bis 40 Gew.-%, bevorzugt 20 bis 35 Gew.-%, bezogen auf das Pfropfcopolymer B, mindestens einer Pfropfhülle B2", die durch Emulsionspolymerisation erhalten wird, in Anwesenheit von Pfropfgrundlage B1, gepfropft mit B2', von:

B21": 50 bis 95 Gew.-%, bevorzugt 65 bis 90 Gew.-%, besonders bevorzugt 70 bis 85 Gew.-%, bezogen auf die Pfropfhülle B2", mindestens ein vinylaromatisches Monomer B21", ausgewählt aus Styrol und (alpha)-Methylstyrol, insbesondere Styrol; und
B22": 5 bis 50 Gew.-%, bevorzugt 10 bis 35 Gew.-%, besonders bevorzugt 15 bis 30 Gew.-%, bezogen auf die Pfropfhülle B2", mindestens ein Monomer B22" ausgewählt aus Acrylnitril oder Mischungen aus Acrylnitril und mindestens einem weiteren Monomer ausgewählt aus Methacrylnitril, Acrylamid, Vinylmethylether, Anhydriden ungesättigter Carbonsäuren (z.B. Maleinsäureanhydrid, Phthalsäureanhydrid) und Imiden ungesättigter Carbonsäuren (z.B. N-substituiertes Maleimid, wie N-Cyclohexylmaleimid und N-Phenylmaleimid), vorzugsweise ausgewählt aus Acrylnitril oder Mischungen von Acrylnitril und Methacrylnitril;

wobei die Gesamtsumme aus Pfropfgrundlage B1, Pfropfhülle B2' und Pfropfhülle B2" 100 Gew.-% beträgt, und wobei der in Schritt a) erhaltene Latex des Pfropfcopolymers B eine Teilchengröße (insbesondere mittlerer Teilchendurchmesser Dv im Bereich von 300 bis 800 nm, bevorzugt 350 bis 700 nm, aufweist.

Gemäß einer weiteren Ausführungsform ist das Pfropfcopolymer B eine Mischung aus den oben beschriebenen Ausführungsformen von Einstufen-Pfropfcopolymer B und Zweistufen-Pfropfcopolymer B (einschließlich Pfropf B2' und B2").

Besonders bevorzugt sind die Monomere B21, B21' und B21" Styrol oder Mischungen aus Styrol und alpha-Methylstyrol. Der Anteil an Styrol, bezogen auf die Gesamtmenge B21 (bzw. B21' und B21"), beträgt vorzugsweise mindestens 50 Gew.-%, besonders bevorzugt mindestens 80 Gew.-%, ganz besonders bevorzugt mindestens 90 Gew.-%.

Besonders bevorzugt sind die Monomere B22 und B22" Acrylnitril oder Mischungen aus Acrylnitril und mindestens einem weiteren Monomer ausgewählt aus Methacrylnitril, Maleinsäureanhydrid, N-Cyclohexylmaleinimid, N-Phenylmaleinimid, besonders bevorzugt Acrylnitril oder Mischungen aus Acrylnitril und mindestens einem weiteren Monomer ausgewählt aus Methacrylnitril und Maleinsäureanhydrid. In den vorgenannten Mischungen von Acrylnitril beträgt der Anteil an Acrylnitril, bezogen auf Gesamtmenge der Monomere B22 bzw. B22", mindestens 50 Gew.-%, bevorzugt mindestens 80 Gew.-%, besonders bevorzugt 90 Gew.-%.

In einer besonders bevorzugten Ausführungsform der Erfindung sind die Monomere B21, B21' und B21" Styrol und die Monomere B22 und B22" Acrylnitril.

In einer anderen Ausführungsform kann das Pfropfcopolymer B ein ABS-Pfropfcopolymer sein, enthaltend:

B1: 40 bis 80 Gew.-%, bevorzugt 45 bis 70 Gew.-%, besonders bevorzugt 45 bis 65 Gew.-%, bezogen auf das Pfropfcopolymer B, mindestens einer Pfropfgrundlage B1, erhalten durch Emulsionspolymerisation von Butadien als Monomer B1; und

B2: 20 bis 60 Gew.-%, bevorzugt 30 bis 55 Gew.-%, besonders bevorzugt 35 bis 55 Gew.-%, bezogen auf das Pfropfcopolymer B, mindestens eine Pfropfhülle B2 wie oben beschrieben, bevorzugt erhalten durch Emulsionspolymerisation von 65 bis 85 Gew.-%, bezogen auf die Pfropfhülle B2, Styrol als Monomer B21 und 15 bis 35 Gew.-%,

bezogen auf die Pfropfhülle B2, Acrylnitril als Monomer B22, in Gegenwart der mindestens einen Pfropfgrundlage B1;

wobei die Gesamtsumme aus Pfropfgrundlage B1 und Pfropfhülle B2 gleich 100 Gew.- % ist; und wobei der Latex des ABS-Pfropfcopolymers B eine Teilchengröße (insbesondere mittlerer Teilchendurchmesser Dv) im Bereich von 100 bis 500 nm aufweist.

In einer weiteren Ausführungsform der Erfindung umfasst das erfindungsgemäße Verfahren die Synthese von mindestens zwei, vorzugsweise zwei, drei oder vier unterschiedlichen Pfropfcopolymeren B, wobei sich die Pfropfcopolymere B (z.B. Pfropfcopolymere B-I und B-II) in ihrer Teilchengröße unterscheiden.

Pfropfcopolymer B umfasst in der vorgenannten Ausführungsform insbesondere mindestens zwei Pfropfcopolymere B-I und B-II, vorzugsweise auf Basis von vernetzten $C_1$-$C_8$-Alkyl(meth)acrylat-Pfropfgrundlagen B1 wie oben beschrieben, wobei:

Pfropfcopolymer B-I (feinteiliger ASA-Kautschuk) eine Teilchengröße (insbesondere mittlerer Teilchendurchmesser Dv) im Bereich von 60 bis 200 nm, bevorzugt von 80 bis 150 nm, aufweist und

Pfropfcopolymer B-II (grobteiliger ASA Kautschuk) eine Partikelgröße (mittlerer Partikeldurchmesser Dv) im Bereich von 300 bis 800 nm, bevorzugt 350 bis 700 nm, aufweist.

Das Pfropfcopolymer B-I (feinteiliger ASA-Kautschuk) wird vorzugsweise durch Emulsionspolymerisation der Monomeren B21 und B22 wie oben beschrieben, insbesondere von Styrol als B21 und Acrylnitril als B22, erhalten, in Gegenwart der zuvor hergestellten wie oben beschriebenen Pfropfgrundlage B1, als Beispiel für ein einstufiges Pfropfcopolymer B.

Vorzugsweise soll das Pfropfcopolymer B-II (grobteiliger ASA-Kautschuk) eine enge Teilchengrößenverteilung aufweisen, wobei die Teilchengrößenverteilung $Q = (D_{90}-D_{10})/D_{50}$ weniger als 0,3, vorzugsweise weniger als 0,2 beträgt.

Gemäß einer weiteren bevorzugten Ausführungsform ist das Pfropfcopolymer B ein durch Emulsionspolymerisation hergestelltes Pfropfcopolymer mit einer Kern-Schale-Struktur, umfassend einen inneren Kern BK1 und drei Schichten BK2, BH1 und BH2, in der Reihenfolge BK1, BK2, BH1, BH2 von innen nach außen (beispielsweise wie beschrieben in WO 2020/020834 A1). In dem zuvor beschriebenen Pfropfcopolymer B mit einer Kern-Schale-Struktur umfasst die oben beschriebene Pfropfgrundlage B1 einen inneren Kern BK1 und eine äußere Kernschale BK2, und die Pfropfhülle B2 bzw. B2' und B2"umfasst die Schichten BH1 und BH2.

Gemäß einer weiteren bevorzugten Ausführungsform ist das Pfropfcopolymer B ein durch Emulsionspolymerisation hergestelltes Pfropfcopolymer mit einer Kern-Schale-Struktur, umfassend einen inneren Kern BS und vier Schichten BK1, BK2, BH1 und BH2, in der Reihenfolge BS, BK1, BK2, BH1, BH2 von innen nach außen.

In dem zuvor beschriebenen Pfropfcopolymer B mit einer Kern-Schale-Struktur umfasst die oben beschriebene Pfropfgrundlage B1 einen inneren Kern BS, eine erste Kernschale BK1 und eine zweite (äußere) Kernschale BK2, und die Pfropfhülle B2 bzw. B2' und B2" umfasst die Schichten BH1 und BH2.

Oftmals sind solche Pfropfcopolymere B mit einer Kern-Schale-Struktur zusammengesetzt aus:

BS: 0 bis 5 Gew.-% eines inneren Kerns BS bestehend aus mindestens einem Copolymer aus:

BK21: 95,0 bis 99,0 Gew.-% mindestens eines C2-C8-Alkylacrylats;
BK22: 1,0 bis 5,0 Gew.-% eines oder mehrerer bi- oder polyfunktioneller, vernetzender Monomere;

BK1: 0 bis 19 Gew.-% eines inneren Kerns BK1, oder - falls BS vorhanden - einer Kernschale BK1, bestehend aus mindestens einem Copolymer aus:

BK11: 95,0 bis 99,9 Gew.-% mindestens eines vinylaromatischen Monomers und
BK12: 0,1 bis 5,0 Gew.-% mindestens eines bi- oder polyfunktionellen, vernetzenden Monomers;

BK2: 40 bis 61 Gew.-% einer Kernschale BK2 bestehend aus mindestens einem Copolymer aus:

BK21: 95,0 bis 99,0 Gew.-% mindestens eines C2-C8-Alkylacrylats;
BK22: 1,0 bis 5,0 Gew.-% eines oder mehrerer bi- oder polyfunktioneller, vernetzender Monomere;

BH1: 1 bis 19 Gew.-% einer ersten Pfropfhüllenschicht BH1, bestehend aus mindestens einem vinylaromatischen Polymer; und

BH2: 21 bis 39 Gew.-% einer zweiten Pfropfhüllenschicht BH2 bestehend aus mindestens einem Copolymer enthaltend mindestens ein vinylaromatisches Monomer BH21 und mindestens ein Nitrilmonomer BH22;

wobei die Summe von BS, BK1, BK2, BH1 und BH2 100 Gew.-% ergibt; und wobei der mittlere Teilchendurchmesser $D_v$ des Pfropfcopolymers B im Bereich von 300 bis 600 nm liegt.

Geeignete vernetzte $C_1$-$C_8$-Alkyl(meth)acrylat-Polymer-Pfropfgrundlagen B1 des Pfropfcopolymers B-II (bezeichnet als B1-II) können nach bekannten Verfahren zur Herstellung von grobteiligen Dispersionen hergestellt werden, zweckmäßigerweise durch Saatpolymerisation, wie in DE 1 911 882 zur Herstellung von ASA-Polymeren beschrieben.

Gemäß diesem Verfahren wird ein feinteiliger, vernetzter Acrylatlatex oder ein feinteiliger, vernetzter Polystyrollatex mit einer Teilchengröße (insbesondere mittlerer Teilchendurchmesser $D_w$) von 50 bis 180 nm, vorzugsweise 50 bis 120 nm, als Saatlatex eingesetzt. Der Saatlatex der durch Emulsionspolymerisation von $C_1$-$C_8$-Alkyl(meth)acrylaten, und vernetzenden Monomeren oder durch Emulsionspolymerisation von Styrol und vernetzenden Monomeren (siehe z.B. BK1 wie oben beschrieben) erhalten wird, wird einer weiteren Polymerisationsreaktion unterzogen. Insbesondere werden die Reaktionsbedingungen so eingestellt, dass nur ein weiteres Wachstum der vorliegenden Keimlatexpartikel ermöglicht wird, ohne neue Latexpartikel zu bilden (beschrieben in Journal of Applied Polymer Science, Bd. 9 (1965), Seiten 2929 bis 2938). Normalerweise wird bei diesem Verfahren ein Initiator verwendet.

Durch Variation des Verhältnisses von Saatlatex zu Monomeren kann die Teilchengröße des resultierenden Pfropfcopolymers B-II (grobteiliger Kautschuk) eingestellt werden. Pfropfcopolymer B-II wird vorzugsweise durch Emulsionspolymerisation der Monomeren B21 und B22 wie oben beschrieben, insbesondere Styrol oder α-Methylstyrol als B21 und Acrylnitril als B22, in Gegenwart der zuvor hergestellten Pfropfgrundlage B1-II erhalten.

Vorzugsweise werden die oben beschriebenen Pfropfcopolymere B-I und B-II in den Schritten a) bis c), gegebenenfalls d), und e), sowie gegebenenfalls f) und g) getrennt hergestellt, ausgefällt, gesintert, gegebenenfalls abgekühlt, entwässert und gegebenenfalls gewaschen und getrocknet.

Es ist auch möglich, die Pfropfcopolymer-Latices B-I und B-II nach ihrer getrennten Herstellung in Schritt a) zu mischen und gemeinsam in Schritt b) auszufällen. Nachfolgende Schritte wie das Sintern in Schritt c), das Abkühlen in Schritt d), das Entwässern in Schritt e), das Waschen in Schritt f) und das Trocknen in Schritt g) können wie beschrieben durchgeführt werden.

Das Gewichtsverhältnis der Pfropfcopolymerisate B-I und B-II kann in weiten Bereichen variiert werden.

Vorzugsweise ist das Pfropfcopolymer B eine Mischung aus Pfropfcopolymer B-I und B-II, wobei das Gewichtsverhältnis von B-I: B-II von 90 : 10 bis 10 : 90, vorzugsweise 80 : 20 bis 20 : 80, beträgt.

Über bekannte Agglomerationsverfahren können auch Pfropfcopolymere B mit unterschiedlichen Teilchengrößen, insbesondere bimodalen Teilchengrößenverteilungen von 60 bis 200 nm und 300 bis 600 nm erhalten werden.

Pfropfcopolymere mit großen und kleinen Teilchen sind beispielsweise in der DE-A 36 15 607 beschrieben.

Weiterhin können Pfropfcopolymere B mit zwei oder mehr unterschiedlichen Pfropfhüllen B2 wie oben beschrieben eingesetzt werden. Weitere Pfropfcopolymere mit mehrschichtigen Pfropfhüllen sind z. B. in EP-A 0111260 und WO 2015/078751 beschrieben.

Schritt a) - Herstellung des Pfropfcopolymers B durch Emulsionspolymerisation

Die Herstellung eines Latex mindestens eines Pfropfcopolymers B in Schritt a) des erfindungsgemäßen Verfahrens umfasst:

a1) Vorlage eines wässrigen Latex enthaltend mindestens eine, bevorzugt eine, Pfropfgrundlage B1;
a2) gegebenenfalls Herstellung einer ersten Pfropfhülle B2 bzw. B2' durch:

a2-1) Zugabe und Emulsionspolymerisation eines ersten Teils - bezogen auf die Gesamtmenge B21 - des mindestens einen Monomers B21 bzw. B21', bevorzugt Styrol, zu der Pfropfgrundlage B1;
a2-2) Nachpolymerisation des in a2-1) erhaltenen Latex;

a3) Herstellung einer ersten Pfropfhülle B2 oder - falls die Schritte a2-1) und a2-2 vorhanden sind - Herstellung einer zweiten Pfropfhülle B2 bzw. B2" durch:

a3-1) simultane Zugabe und Emulsionspolymerisation eines ersten oder weiteren Teils des mindestens einen Monomers B21 bzw. B21" - bezogen auf die Gesamtmenge B21 - und der Gesamtmenge des mindestens einen Monomers B22 bzw. B22" zu dem Latex aus Schritt a1) bzw. a2-2);
a3-2) unmittelbar nach Beendigung der Zugabe der Monomere in Schritt a3-1), Zugabe und Emulsionspolymerisation des restlichen Teils des mindestens einen Monomers B21 bzw. B21" - bezogen auf die Gesamtmenge B21 - zu dem in Schritt a3-1) erhaltenen Latex;

a3-3) Nachpolymerisation des in Schritt 3-2) erhaltenen Latex des Pfropfcopolymers B.

Typischerweise wird das Pfropfcopolymer B in Form eines Latex (Kautschuk) durch Emulsionspolymerisation in Schritt a) hergestellt, wobei zunächst eine oder mehrere Pfropfgrundlage(n) B1 durch Emulsionspolymerisation der Monomere B11, B12 und gegebenenfalls B13 wie beschrieben und anschließend eine oder mehrere Pfropfhülle(n) B2 durch Emulsions-Pfropfpolymerisation der Monomeren B21 und B22 wie beschrieben in Gegenwart einer oder mehrerer der Pfropfgrundlagen B1 erhalten werden.

Vorzugsweise wird der Latex des Pfropfcopolymers B durch wässrige radikalische Emulsionspolymerisation polymerisiert. Die Reaktion wird typischerweise über wasserlösliche oder öllösliche radikalische Polymerisationsinitiatoren initiiert, z.B. anorganische oder organische Peroxide, wie Peroxodisulfat oder Benzoylperoxid, oder mit Hilfe von Redox-Initiatorsystemen (s. WO 2002/10222, DE-A 28 26 925, sowie EP-A 022 200). Bevorzugt wird bei der Emulsionspolymerisation des Pfropfcopolymers B ein anorganisches Peroxidsalz, insbesondere ein anorganisches Peroxodisulfatsalz, vorzugsweise Natriumperoxodisulfat und/oder Kaliumperoxodisulfat, eingesetzt.

Als Emulgator bei der Herstellung der Pfropfgrundlage B1 und/oder bei der Emulsionspolymerisation zur Herstellung des mindestens einen Pfropfcopolymers B können übliche anionische Emulgatoren enthalten sein. Bevorzugt werden als Emulgatoren eingesetzt: Alkylsulfate, Alkylsulfonate, Alkylsulfonsäuren, Arylsulfonate, Seifen gesättigter oder ungesättigter Fettsäuren, sowie alkalisch disproportionierte oder hydrierte Abiat- oder Tallölsäuren oder deren Mischungen. Zur Herstellung von Pfropfgrundlagen auf Basis von Butadien werden bevorzugt Emulgatoren mit Carboxygruppen eingesetzt (z. B. disproportionierte Abiatsäure, Salze von $C_{10}$-$C_{18}$-Fettsäuren). Weiterhin bevorzugt für Pfropfgrundlagen auf Basis von Butadien können als Emulgatoren Alkaliseifen von Natrium- und Kaliumsalzen von disproportionierten und/oder dehydrierten und/oder hydrierten und/oder teilhydrierten Harzen (Kolophonium) mit mindestens 30 Gew.-% Gehalt an Dehydroabiatsäure und mit höchstens 1 Gew.-% Gehalt an Abiatsäure eingesetzt werden.

Zur Herstellung von Pfropfgrundlagen auf Basis von $C_1$-$C_8$-Alkyl(meth)acrylaten werden als Emulgator bevorzugt $C_{10}$-$C_{20}$-Alkylsulfonsäuren und/oder $C_{10}$-$C_{20}$-Alkylsulfonate, beispielsweise eine $C_{12}$-$C_{18}$-Alkylsulfonsäure, eingesetzt.

Weiterhin können bei der Emulsionspolymerisation der Pfropfgrundlage B1 und der Pfropfhülle B2 Salze, Säuren und Basen eingesetzt werden, insbesondere zur Einstellung des pH-Wertes oder zur Pufferung der Reaktionsmischung.

Beispielsweise können Schwefelsäure, Phosphorsäure, Lösungen von Natriumhydroxid, Kaliumhydroxid, Natriumsalze und Kaliumsalze von Carbonaten, Bicarbonaten, Sulfaten und/oder Phosphaten (z. B. Tetranatriumpyrophosphat) verwendet werden.

In einer bevorzugten Ausführungsform wird als Puffer mindestens ein Carbonat- und/oder Bicarbonatsalz, wie Natriumbicarbonat, verwendet.

Die Polymerisationstemperatur bei der Emulsionspolymerisation des Pfropfcopolymers B in Schritt a), d.h. a2) und a3), des erfindungsgemäßen Verfahrens beträgt im Allgemeinen 25 bis 95°C, bevorzugt 40 bis 90°C, besonders bevorzugt 50 bis 80°C, insbesondere 55 bis 70°C.

Konventionelle Temperierung, z.B. isotherm, kann hier verwendet werden; vorzugsweise wird die Pfropfpolymerisationsreaktion jedoch so geführt, dass die Temperaturdifferenz zwischen Beginn und Ende der Reaktion mindestens 2°C, bevorzugt mindestens 3°C, oftmals 2 bis 3°C, beträgt (d.h. bei Ende der Reaktion ist Temperatur entsprechend höher).

Erfindungsgemäß erfolgt die Herstellung des Pfropfcopolymers B mittels Emulsionspolymerisation. Dem Fachmann sind geläufige Ausführungsformen der Emulsionspolymerisationsreaktion im Batchbetrieb oder im kontinuierlichen Betrieb bekannt.

Der optionale Schritt a2) umfasst die Herstellung einer ersten Pfropfhülle B2 bzw. B2' durch:

a2-1) Zugabe und Emulsionspolymerisation eines ersten Teils des mindestens einen Monomers B21 bzw. B21', bevorzugt Styrol, zu der Pfropfgrundlage B1, wobei ein Latex einer mit B2' gepfropften Pfropfgrundlage B1 erhalten wird, und

a2-2) Nachpolymerisation des in a2-1) erhaltenen Latex.

Die Temperatur in Schritt a2) wird wie zuvor beschrieben gewählt und beträgt vorzugsweise 50 bis 80°C, insbesondere 55 bis 70°C.

Die Nachpolymerisation in Schritt a2-2) erfolgt vorzugsweise über einen Zeitraum von 15 bis 45 Minuten, bevorzugt 20 bis 35 Minuten.

Schritt a3) des erfindungsgemäßen Verfahrens umfasst die Herstellung einer ersten Pfropfhülle B2 oder - falls die Schritte a2-1) und a2-2) vorhanden sind - die Herstellung einer zweiten Pfropfhülle B2 bzw. B2" wie zuvor beschrieben.

Die Temperatur in Schritt a3) wird wie zuvor beschrieben gewählt und beträgt vorzugsweise 50 bis 80°C, insbesondere 50 bis 70°C. Vorzugsweise ist die Temperatur in Schritt a3) mindestens 2°C, bevorzugt 3 bis 4 °C, höher als die Temperatur in Schritt a2).

In Schritt a3-1) werden die Monomere B21 bzw. B21" und B22 bzw. B22" einzeln oder als Monomermischung in den angegebenen Mengen und Verhältnissen kontinuierlich dem Latex aus Schritt a1) bzw. a2-2) zugesetzt und polymerisiert.

Die Zugabe der Monomere erfolgt bevorzugt über einen Zeitraum von 60 bis 250 Minuten, besonders bevorzugt 100 bis 200 Minuten, ganz besonders bevorzugt 120 bis 180 Minuten.

In Schritt a3-2) erfolgt die Zugabe des restlichen Teils des mindestens einen Monomers B21 bzw. B21", bevorzugt Styrol, im Allgemeinen über einen Zeitraum von 5 bis 45 Minuten, bevorzugt 10 bis 35 Minuten, besonders bevorzugt 15 bis 35 Minuten, insbesondere 20 bis 30 Minuten.

In Schritt a3-2) ist unter dem "restlichen Teil" des mindestens einen Monomers B21 bzw. B21" im Allgemeinen bis zu 5 Gew.-%, vorzugsweise 1 bis 4,5 Gew.-%, bezogen auf das Pfropfcopolymer B, zu verstehen.

In Schritt a3-3) erfolgt die Nachpolymerisation des in Schritt 3-2) erhaltenen Latex des Pfropfcopolymers B bevorzugt für mindestens 15 Minuten, besonders bevorzugt für 20 bis 90 Minuten, ganz besonders bevorzugt 30 bis 60 Minuten.

Das erfindungsgemäße Verfahren kann ferner die Schritte b) bis g) wie oben beschrieben umfassen. Bevorzugt ist ein erfindungsgemäßes Verfahren wie oben beschrieben umfassend die Schritte a), b), c) und e), sowie optional die Schritte d), f) und/oder g).

Schritt b) Fällung des Latex des Pfropfcopolymers B

Schritt b) des erfindungsgemäßen Verfahrens umfasst das Ausfällen des in Schritt a) erhaltenen Pfropfcopolymers B, wobei der Latex des Pfropfcopolymers B mit mindestens einer Fällungslösung PS gemischt wird, wodurch eine Fällungsmischung entsteht, wobei vorzugsweise die mindestens eine Fällungslösung PS mindestens ein Salz und/oder Säure enthält. Insbesondere enthält die Fällungslösung PS mindestens ein Erdalkalimetallsalz, vorzugsweise mindestens ein Salz von Magnesium und/oder Calcium; besonders bevorzugt mindestens ein Magnesiumsalz.

Insbesondere ist das mindestens eine Erdalkalimetallsalz ausgewählt aus Erdalkalimetallhalogeniden wie Chloriden, Erdalkalimetallsulfaten, Erdalkalimetallphosphaten wie Orthophosphate oder Pyrophosphate, Erdalkalimetallacetaten und Erdalkalimetallformiaten. Vorzugsweise ist das mindestens eine Erdalkalimetallsalz ausgewählt aus Chloriden und Sulfaten.

Bevorzugte Erdalkalimetallsalze sind hierbei Magnesiumsulfat (wie Kieserit ($Mg[SO_4] \cdot H_2O$), Pentahydrit ($Mg[SO_4] \cdot 5H_2O$), Hexahydrit ($Mg[SO_4] \cdot 6H_2O$) und Epsomit ($Mg[SO_4] \cdot 7H_2O$, Bittersalz), Magnesiumchlorid, Calciumchlorid, Calciumformiat, Magnesiumformiat oder Mischungen davon. Besonders bevorzugt ist die Verwendung von Magnesiumsulfat.

Insbesondere liegt der Feststoffgehalt der in Schritt b) erhaltenen Fällungsmischung im Bereich von 5 bis 20 Gew.-%, vorzugsweise 7 bis 18 Gew.-%, stärker bevorzugt 10 bis 18 Gew.-%, auch bevorzugt 12 bis 20 Gew.-%.

Vorzugsweise liegt der pH-Wert der in Schritt b) erhaltenen Fällungsmischung im Bereich von 5 bis 10, bevorzugt im Bereich von 6 bis 9, besonders bevorzugt 8 bis 9. Beispielsweise kann der pH-Wert durch Zugabe von Puffersalzen, Säuren und/oder Basen eingestellt werden, wobei beispielsweise Schwefelsäure, Phosphorsäure, Lösungen von Natriumhydroxid, Kaliumhydroxid, Natriumsalze und Kaliumsalze von Carbonaten (z. B. Natriumcarbonat $Na_2CO_3$ und/oder Natriumhydrogencarbonat $NaHCO_3$ oder Mischungen davon), Sulfate oder Phosphate (z. B. Tetranatriumpyrophosphat) verwendet werden.

Beispielsweise wird bevorzugt mindestens ein Puffersalz ausgewählt aus Natriumsalzen, insbesondere ausgewählt aus Natriumcarbonaten, Natriumsulfaten und Natriumphosphaten, vorzugsweise ausgewählt aus Natriumcarbonat $Na_2CO_3$ und Natriumhydrogencarbonat $NaHCO_3$, zugesetzt.

Die Zugabe der Puffersalze, Säuren und/oder Basen kann während der Schritte a) und/oder b), bevorzugt während der Herstellung des mindestens einen Pfropfcopolymers B (Emulsionspolymerisation, Schritt a) erfolgen.

Typischerweise werden in Schritt b) die Fällungslösung PS und der Pfropfcopolymer B-Latex über einen Zeitraum im Bereich von 5 bis 40 Minuten, vorzugsweise 5 bis 35 Minuten gemischt.

Die Fällung in Schritt b) wird bei einer Temperatur (= T1) von 30 bis 95°C, bevorzugt 40 bis 90°C, besonders bevorzugt 50 bis 90°C, ganz besonders bevorzugt 60 bis 88°C, durchgeführt. Vorzugsweise wird der Latex des Pfropfcopolymers B mit der mindestens einen Fällungslösung PS bei einer Temperatur (= T1) von 30 bis 95°C, bevorzugt 40 bis 90°C, besonders bevorzugt 50 bis 90°C, gemischt. Die Fällung erfolgt vorzugsweise in einem Fällbehälter (z.B. Fällkessel).

Schritt c) Sinterung der Fällungsmischung

In Schritt c) des erfindungsgemäßen Verfahrens wird die in Schritt b) erhaltene Fällungsmischung bei einer Temperatur (= T2) von 85 bis 150°C, vorzugsweise 90 bis 145°C, insbesondere 90 bis 140°C, ganz besonders bevorzugt 92 bis 135°C, gesintert.

Die Temperatur (= T2) in Schritt c) ist im Allgemeinen mindestens 5°C, bevorzugt mindestens 10°C, besonders bevorzugt 15°C, höher ist als die Temperatur (= T1) in Schritt b).

Während der Sinterung wird die Fällungsmischung im Allgemeinen für mindestens 15 Minuten, bevorzugt für einen Zeitraum 15 bis 90 Minuten, besonders bevorzugt 15 bis 75 Minuten, ganz besonders bevorzugt 20 bis 60 Minuten, auf dieser Temperatur T2 gehalten.

Durch die Sinterung werden die in der Fällungsmischung enthaltenen Pfropfcopolymerpartikel agglomeriert, so dass größere Partikel erhalten werden.

Das Ausfällen in Schritt b) und das Sintern in Schritt c) des erfindungsgemäßen Verfahrens kann in unterschiedlichen Behältern durchgeführt werden oder im gleichen Behälter, wobei Ausfällen und Sintern im gleichen Behälter insbesondere dann möglich ist, wenn das Verfahren batchweise betrieben wird, da in diesem Fall zunächst bei niedrigerer Temperatur der Pfropfcopolymer-Latex mit der Fällungslösung gemischt wird und anschließend bei höherer Temperatur die Pfropfcopolymerpartikel gesintert werden. Bevorzugt ist es daher, wenn für Schritt (b) ein Fällbehälter und für Schritt (c) ein Sinterbehälter verwendet werden, wobei der Sinterbehälter und der Fällbehälter zwei unterschiedliche Behälter sind.

Schritt d) - Abkühlen der gesinterten Fällungsmischung

Es hat sich als vorteilhaft erwiesen, vor der mechanischen Entwässerung in Schritt e), die in Schritt c) des erfindungsgemäßen Verfahrens erhaltene gesinterte Fällungsmischung abkühlen zu lassen (optionaler Schritt d)), vorzugsweise auf eine Temperatur von 20 bis 90°C, oftmals 20 bis 80°C, sowie oftmals 20 bis 70°C. Zur Abkühlung der gesinterten Fällungsmischung kann z.B. ein Wärmetauscher eingesetzt werden.

Schritt e) - Mechanische Entwässerung der gesinterten Fällungsmischung

In Schritt e) des erfindungsgemäßen Verfahrens wird eine mechanische Entwässerung der in Schritt c) oder d) erhaltenen gesinterten Fällungsmischung durchgeführt, wobei ein Pfropfcopolymer B mit einem Wassergehalt von gleich oder kleiner 50 Gew.-%, vorzugsweise gleich oder kleiner 40 Gew.-%, besonders bevorzugt 10 bis 35 Gew.-%, erhalten wird.

Der Wassergehalt (auch als Restfeuchte bezeichnet) des Pfropfcopolymers B nach der Entwässerung ist der Gehalt an Wasser in Gewichtsprozent, bezogen auf das nach der Entwässerung erhaltene feuchte Pfropfcopolymer B.

Der Wassergehalt wird insbesondere mit Hilfe geeigneter Analysegeräte (z. B. Trocknungs- und Wiegeeinrichtungen) bestimmt, wobei die Probe getrocknet wird, bis über einen definierten Zeitraum eine Gewichtskonstanz der Probe erreicht ist. Beispielsweise kann der Wassergehalt des Pfropfcopolymers B in einem Halogen Moisture Analyzer HR73 der Firma Mettler Toledo bei 180°C bestimmt werden bis für 30 Sekunden eine Gewichtskonstanz erreicht wird.

Insbesondere liegt der Wassergehalt des in Schritt e) erhaltenen entwässerten Pfropfcopolymers B im Bereich von 10 bis 50 Gew.-%, vorzugsweise 10 bis 40 Gew.-%, besonders bevorzugt 10 bis 35 Gew.-% (bezogen auf das gesamte entwässerte Pfropfcopolymer B).

Typischerweise umfasst Schritt e) des erfindungsgemäßen Verfahrens die mechanische Entwässerung des gesinterten Pfropfcopolymers B mittels kontinuierlicher oder diskontinuierlicher Zentrifugation und/oder Filtration.

Vorzugsweise wird die mechanische Entwässerung des gesinterten Pfropfcopolymers B durch kontinuierliches Zentrifugieren erreicht.

Das gesinterte Pfropfcopolymer B wird typischerweise mit einer Zentripetalbeschleunigung von 200 bis 2200 g (wobei g die Erdbeschleunigung (1 g = 9,81 m/s) ist), vorzugsweise von 500 bis 1500 g, für einen Zeitraum von 1 Sekunde bis 5 Minuten, vorzugsweise 1 bis 120 Sekunden, zentrifugiert.

Schritt f) - Optionales Waschen des entwässerten Pfropfcopolymers B

Die mechanische Entwässerung des Pfropfcopolymers B in Schritt e) kann kombiniert werden mit einem Waschschritt (z. B. auf einer Zentrifuge) oder kann gefolgt sein von einem Waschschritt (Schritt f)), wobei das entwässerte Pfropfcopolymer B vorzugsweise mit Wasser behandelt wird.

Weiterhin ist es möglich, eine Mischung aus Wasser und einem polaren, mit Wasser mischbaren organischen Lösungsmittel, wie Alkoholen, zu verwenden.

Vorzugsweise wird das Wasser oder die vorgenannte Wasser-Mischung nach der Behandlung des Pfropfcopolymers B durch Filtration und/oder Zentrifugation entfernt. Vorzugsweise wird in einem nachgeschalteten Waschschritt f) ein Pfropfcopolymer B mit einem Wassergehalt im Bereich von 10 bis 50 Gew.-%, bevorzugt 10 bis 40 Gew.-%, besonders bevorzugt 10 bis 35 Gew.-%, erhalten.

Es ist auch bevorzugt, dass ein Pfropfcopolymer B mit einem Wassergehalt, wie oben für Schritt e) beschrieben, erhalten wird.

Schritt g) - Optionales Trocknen des entwässerten Pfropfcopolymers B

Das erfindungsgemäße Verfahren umfasst optional auch das Trocknen (Schritt g) des in Schritt e) oder f) erhaltenen - entwässerten und gegebenenfalls gewaschenen - Pfropfcopolymers B in bekannter Weise.

Beispielsweise kann das entwässerte und gegebenenfalls gewaschene Pfropfcopolymer B durch heißes Trocknungsgas, z.B. Luft oder mittels eines pneumatischen Trockners getrocknet werden. Die Trocknung kann beispielsweise in einem Schranktrockner oder anderen allgemein bekannten Trocknungsapparaten wie Stromtrockner oder Fließbetttrockner durchgeführt werden. Typischerweise wird der optionale Trocknungsschritt bei einer Temperatur des Trocknungsapparats oder des Trocknungsgases im Bereich von 50 bis 180°C, vorzugsweise von 55 bis 155°C, besonders bevorzugt von 60 bis 150°C durchgeführt.

Typischerweise weist das erhaltene getrocknete Pfropfcopolymer B einen Wassergehalt unter 5 Gew.-%, bevorzugt unter 1 Gew.-%, bevorzugt im Bereich von 0,05 bis 0,8 Gew.-%, bevorzugt 0,1 bis 0,8 Gew.-%, auf.

Ein weiterer Gegenstand der Erfindung ist ein durch das erfindungsgemäße Verfahren erhaltenes Pfropfcopolymer B. Durch das erfindungsgemäße Verfahren erhaltene Pfropfcopolymere B zeichnen sich - im Vergleich zu nicht erfindungsgemäßen Pfropfcopolymeren (ohne Schritt a3-2, d.h. ohne B21 Nachdosierung) - durch eine weiße oder nahezu weiße Farbe auch nach dem Sinterschritt aus und weisen einen niedrigen, deutlich reduzierten, Yellowness-Index (gemessen gemäß ASTM E313-10) auf.

Ein weiterer Gegenstand der Erfindung ist ein Verfahren zur Herstellung einer thermoplastischen Formmasse, enthaltend mindestens ein nach dem erfindungsgemäßen Verfahren erhaltenes Pfropfcopolymer B, und mindestens ein thermoplastisches Vinylaromat-Copolymer A, optional mindestens eine weitere polymere Komponente C ausgewählt aus Polycarbonaten, Polyamiden und Polyestern, und optional ein oder mehrere Additive und/oder Hilfsmittel D, durch Mischen der Komponenten, vorzugsweise in der Schmelze.

Vorzugsweise ist das mindestens eine thermoplastische Vinylaromat-Copolymer A ein kautschukfreies Polymer.

Bevorzugt ist das mindestens eine thermoplastische Vinylaromat-Copolymer A ein Copolymer hergestellt aus:

A1: 50 bis 95 Gew.-%, vorzugsweise 60 bis 90 Gew.-%, stärker bevorzugt 60 bis 85 Gew.-%, bezogen auf das Copolymer A, eines Monomers A1, ausgewählt aus Styrol, alpha-Methylstyrol und Mischungen aus Styrol und mindestens einem weiteren Monomer ausgewählt aus o-Methylstyrol, p-Methylstyrol und $C_1$-$C_8$-Alkyl(meth)acrylat;

A2: 5 bis 50 Gew.-%, bevorzugt 10 bis 40 Gew.-%, besonders bevorzugt 15 bis 40 Gew.-%, bezogen auf das Copolymer A, mindestens eines Monomers A2 ausgewählt aus Acrylnitril und Mischungen aus Acrylnitril und mindestens einem anderen Monomer, ausgewählt aus Methacrylnitril, Acrylamid, Vinylmethylether, Anhydriden von ungesättigten Carbonsäuren (z.B. Maleinsäureanhydrid oder Phthalsäureanhydrid) und Imiden von ungesättigten Carbonsäuren (z.B. N-substituierte Maleimide, wie N-Cyclohexylmaleimid oder N-Phenylmaleimid).

Bevorzugt wird das thermoplastische Copolymer A aus Mischungen von Styrol mit anderen Comonomeren A2 hergestellt. Besonders bevorzugt ist A1 Styrol und A2 Acrylnitril, d.h. das thermoplastische Copolymer A ist ein Styrol-Acrylnitril-Copolymer (SAN). Weiterhin besonders bevorzugt ist A1 (alpha)-Methylstyrol und A2 Acrylnitril, d.h. das thermoplastische Copolymer A ist ein (alpha)-Methylstyrol-Acrylnitril-Copolymer (AMSAN).

Als thermoplastisches Copolymer A kann im Rahmen des Gegenstands der vorliegenden Erfindung im Allgemeinen jedes dem Fachmann bekannte SAN- und/oder AMSAN-Copolymer verwendet werden.

Insbesondere ist das thermoplastische Copolymer A ausgewählt aus SAN- und/oder AMSAN-Copolymeren, die weniger als 36 Gew.-% Acrylnitril als Monomer A2, bezogen auf das Copolymer A, enthalten. Vorzugsweise enthält das thermoplastische Copolymer A das mindestens eine vinylaromatische Monomer A1, bevorzugt Styrol, in einer Menge von 50 bis 99 Gew.-%, bevorzugt 60 bis 95 Gew.-%, besonders bevorzugt 65 bis 90 Gew.-%, ganz besonders bevorzugt 65 bis 70 Gew.-%, und mindestens ein (Meth)acrylnitril Monomer A2, bevorzugt Acrylnitril, in einer Menge von 1 bis 50 Gew.-%, vorzugsweise 5 bis 40 Gew.-%, besonders bevorzugt 10 bis 35 Gew.-%, ganz besonders bevorzugt 30 bis 35 Gew.-%.

Insbesondere liegt das gewichtsmittlere Molekulargewicht (Mw) des thermoplastischen Copolymers A im Bereich von 15.000 bis 200.000 g/mol, bevorzugt im Bereich von 30.000 bis 150.000 g/mol. Typischerweise beträgt die zahlenmittlere Molmasse (Mn) des thermoplastischen Copolymers A 15.000 bis 100.000 g/mol.

Vorzugsweise kann das mittlere Molekulargewicht durch Gelpermeationschromatographie (GPC) relativ zu Polystyrol als Standard und unter Verwendung von zum Beispiel UV-Detektion bestimmt werden.

Vorzugsweise weist das thermoplastische Copolymer A eine Viskositätszahl VZ (bestimmt nach DIN 53726 bei 25°C, 0,5 Gew.-% in Dimethylformamid) von 50 bis 120 ml/g, bevorzugt von 50 bis 100 ml/g, besonders bevorzugt von 55 bis auf 85 ml/g.

In einer bevorzugten Ausführungsform ist das thermoplastische Copolymer A ein SAN (Styrol-Acrylnitril-Copolymer) oder AMSAN (alpha-Methylstyrol-Acrylnitril-Copolymer), das ein mittleres Molekulargewicht und/oder eine mittlere Viskosität in den oben erwähnten Bereichen aufweist.

Das Copolymer A kann nach allen bekannten Verfahren hergestellt werden, beispielsweise Massepolymerisation, Lösungspolymerisation, Suspensionspolymerisation und Emulsionspolymerisation oder Mischverfahren, z.B. Masse-/Suspensionspolymerisationen, mit oder ohne weitere Komponenten.

Die Synthese von thermoplastischen Copolymeren A ist durch thermische Initiierung oder durch Zugabe von Initiatoren, insbesondere radikalischen Initiatoren, wie beispielsweise Peroxiden, möglich.

Vorzugsweise werden thermoplastische Copolymere A durch Masse- oder Lösungspolymerisation hergestellt.

Besonders bevorzugt wird das thermoplastische Copolymer A aus den Komponenten Acrylnitril und Styrol und/oder alpha-Methylstyrol durch Substanzpolymerisation oder in Gegenwart eines oder mehrerer Lösungsmittel, beispielsweise Toluol oder Ethylbenzol, hergestellt.

Ein Polymerisationsverfahren ist z.B. beschrieben im Kunststoff-Handbuch, Vieweg-Daumiller, Band V, (Polystyrol), Carl-Hanser-Verlag, München 1969, Seiten 122 ff.

Gegebenenfalls enthält die thermoplastische Formmasse 0 bis 90 Gew.-%, vorzugsweise 0 bis 60 Gew.-%, oft 0 bis 30 Gew.-%, bezogen auf die gesamte Formmasse mindestens einer weiteren Polymerkomponente C. Vorzugsweise ist die optionale Polymerkomponente C ausgewählt aus Polycarbonaten (einschließlich aromatischer Polycarbonate und aromatischer Polyestercarbonate), Polyamiden und Polyestern, besonders bevorzugt aus Polycarbonaten und Polyamiden.

Vorzugsweise ist die mindestens eine weitere Polymerkomponente C mindestens ein aromatisches Polycarbonat und/oder mindestens ein aromatisches Polyestercarbonat.

Geeignete aromatische Polycarbonate und/oder aromatische Polyestercarbonate sind im Stand der Technik beschrieben und können nach bekannten Verfahren hergestellt werden. Besonders geeignete aromatische Polycarbonate und aromatische Polyestercarbonate und deren Herstellung sind in DE-A 2 714 544, DE-A 3 000 610, DE-A 3 832 396 und DE-A 3 077 934 beschrieben.

Vorzugsweise handelt es sich bei dem als Komponente C eingesetzten aromatischen Polycarbonat um ein Polycarbonat auf Basis von Bisphenol A und Phosgen, wozu auch Polycarbonate gehören, die aus entsprechenden Vorstufen oder Synthesebausteinen von Bisphenol A und Phosgen hergestellt wurden.

Ebenfalls bevorzugt kann die mindestens eine weitere Polymerkomponente C mindestens ein Polyamid sein, ausgewählt aus Homo-Polyamiden, Co-Polyamiden und Mischungen solcher Polyamide. Geeignete Polyamide und Verfahren zu ihrer Herstellung sind aus dem Stand der Technik bekannt. Besonders geeignete teilkristalline Polyamide sind Polyamid-6, Polyamid-6,6, Mischungen und entsprechende Copolymere dieser Komponenten.

Insbesondere kann die nach dem erfindungsgemäßen Verfahren erhaltene thermoplastische Formmasse 0 bis 10 Gew.-%, vorzugsweise 0 bis 5 Gew.-%, oftmals 0,1 bis 5 Gew.-%, bezogen auf die gesamte thermoplastische Formmasse, mindestens eines Additivs und/oder Hilfsmittels D enthalten.

Besonders bevorzugt ist das mindestens eine Additiv und/oder Hilfsmittel D in einer Menge von 0,001 bis 10 Gew.-%, besonders bevorzugt 0,01 bis 5 Gew.-%, bezogen auf die gesamte thermoplastische Formmasse, enthalten.

Insbesondere ist das Additiv und/oder Hilfsmittel D keine polymere Verbindung.

Das optionale Additiv und/oder Hilfsmittel D kann aus allgemein bekannten Additiven und/oder Hilfsstoffen für Kunststoffmaterialien ausgewählt werden. Bezüglich üblicher Hilfs- und Zusatzstoffe wird beispielhaft auf "Plastics Additives Handbook", Ed. Gächter und Müller, 4. Auflage, Hanser Verlag, München, 1996 verwiesen. Beispielsweise kann das mindestens eine Additiv und/oder Hilfsmittel D ausgewählt sein aus Füllstoffen, Verstärkungsmitteln, Farbstoffen, Pigmenten, Gleit- oder Entformungsmitteln, Stabilisatoren, insbesondere Licht- und Wärmestabilisatoren, Antioxidantien, UV-Absorbern, Weichmachern, Antistatika, Flammschutzmitteln, Bakteriziden, Fungiziden, optischen Aufhellern und Treibmitteln.

Das optionale Additiv und/oder Hilfsmittel D ist vorzugsweise ausgewählt aus Farbstoffen, Pigmenten, Gleit- oder Entformungsmitteln, Stabilisatoren, insbesondere Lichtschutzmitteln, Antistatika, Flammschutzmitteln und Füllstoffen, insbesondere mineralischen Füllstoffen.

Die Erfindung richtet sich bevorzugt auf ein Verfahren zur Herstellung einer thermoplastischen Formmasse enthaltend (bevorzugt bestehend aus):

A: 5 bis 95 Gew.-%, bevorzugt 30 bis 95 Gew.-%, besonders bevorzugt 40 bis 90 Gew.-% mindestens eines thermoplastischen Copolymers A hergestellt aus:

A1: 50 bis 95 Gew.-%, vorzugsweise 60 bis 90 Gew.-%, stärker bevorzugt 60 bis 85 Gew.-%, bezogen auf das Copolymer A, eines Monomers A1, ausgewählt aus Styrol, alpha-Methylstyrol und Mischungen aus Styrol und mindestens einem weiteren Monomer ausgewählt aus o-Methylstyrol, p-Methylstyrol und $C_1$-$C_8$-Alkyl(meth)acrylat;

A2: 5 bis 50 Gew.-%, bevorzugt 10 bis 40 Gew.-%, besonders bevorzugt 15 bis 40 Gew.-%, bezogen auf das Copolymer A, mindestens eines Monomers A2 ausgewählt aus Acrylnitril und Mischungen aus Acrylnitril und mindestens einem anderen Monomer, ausgewählt aus Methacrylnitril, Acrylamid, Vinylmethylether, Anhydriden von ungesättigten Carbonsäuren (z.B. Maleinsäureanhydrid oder Phthalsäureanhydrid) und Imiden von ungesättigten Carbonsäuren (z.B. N-substituierte Maleimide, wie N-Cyclohexylmaleimid oder N-Phenylmaleimid).

B: 5 bis 95 Gew.-%, vorzugsweise 5 bis 70 Gew.-%, besonders bevorzugt 10 bis 60 Gew.-% mindestens eines Pfropfcopolymers B wie oben definiert;

C: 0 bis 90 Gew.-%, bevorzugt 0 bis 80 Gew.-%, oftmals 0 bis 30 Gew.-% mindestens einer weiteren polymeren Komponente C, und

D: 0 bis 10 Gew.-%, vorzugsweise 0 bis 5 Gew.-%, häufig 0,1 bis 5 Gew.-% mindestens eines Additivs und/oder Hilfsmittels D; und

wobei das Verfahren die folgenden Schritte umfasst: a), bevorzugt a), b), c), e) und optional d), f) und/oder g) wie oben beschrieben, und
h) Mischen des thermoplastischen Copolymers A und des mindestens einen Pfropfcopolymers B, sowie optional mindestens einer weiteren polymeren Komponente C und/oder optional mindestens eines Additivs und/oder Hilfsmittels D.

Verfahren und Vorrichtungen zum Mischen des Pfropfcopolymers B mit dem thermoplastischen Polymer A und optional der weiteren Polymerkomponente C und/oder Additivs und/oder Hilfsmittels D sind dem Fachmann bekannt.
Mögliche Mischvorrichtungen zur Durchführung der Compoundierung sind beispielsweise diskontinuierlich arbeitende beheizte Innenmischer mit oder ohne Stempel, kontinuierliche Kneter wie kontinuierliche Innenmischer, Schneckenkneter mit axial oszillierenden Schnecken, Banbury-Mischer, kontinuierliche Extruder und Walzwerke, Mischwerke mit beheizten Walzen und Kalander.
Typischerweise umfasst Mischschritt h) Schmelzcompoundieren und/oder Schmelzextrusion und kann typischerweise unter Verwendung von einem oder mehreren Knetern, Extrudern und/oder Doppelwellenschnecken durchgeführt werden. Für die Schmelzextrusion sind beispielsweise Ein- oder Zweischneckenextruder besonders geeignet.
Bevorzugt ist die Verwendung eines Doppelschneckenextruders.
Das Mischen in Schritt h) kann nacheinander oder gleichzeitig erfolgen.
Weiterhin ist es geeignet, einige oder alle Komponenten bei einer Temperatur von 15 bis 40 °C, beispielsweise bei Raumtemperatur, in einem ersten Schritt zu mischen und anschließend - in einem zweiten Schritt - die Temperatur auf 200 bis 300 °C zu erhöhen, gegebenenfalls unter Zugabe von weiteren Komponenten.
Vorzugsweise wird das Mischen in Schritt h) bei Temperaturen im Bereich von 100 bis 400°C, vorzugsweise 180 bis 300°C durchgeführt. Typischerweise hängt diese Temperatur von den chemischen und physikalischen Eigenschaften der Komponenten ab. Typischerweise sollte sie so ausgewählt werden, dass eine im Wesentlichen geschmolzene Polymermischung erreicht wird. Der Begriff "geschmolzen" bedeutet in diesem Zusammenhang, dass alle Komponenten, insbesondere die polymeren Komponenten, geschmolzen sind, mit Ausnahme derer, die nicht geschmolzen werden sollen, z. B. Glasfasern oder Pigmentpartikel. Andererseits sollte die Temperatur nicht unnötig hoch sein, um eine thermische Schädigung der Polymermischung zu vermeiden. Die Mischvorrichtung wird üblicherweise bei Temperaturen von 150 bis 400°C, vorzugsweise 180 bis 300°C betrieben und weist typischerweise unterschiedliche Temperaturzonen auf, wie dem Fachmann bekannt ist.
Das Mischen des thermoplastischen Copolymers A, des mindestens einen Pfropfcopolymers B und gegebenenfalls weiterer Komponenten C und D kann in bekannter Weise nacheinander oder gleichzeitig erfolgen. Weiterhin ist es möglich, einige Komponenten zunächst bei Temperaturen von 15 bis 40°C, insbesondere bei Raumtemperatur (ca. 20°C) zu mischen und dann die Temperatur auf 200 bis 300°C zu erhöhen, gegebenenfalls unter Zugabe von anderen Komponenten.
Weiterhin betrifft die Erfindung eine thermoplastische Formmasse und daraus hergestellte Formkörper, wobei die thermoplastische Formmasse durch das erfindungsgemäße Verfahren zur Herstellung einer thermoplastischen Formmasse enthaltend das Pfropfcopolymer B wie beschrieben und mindestens ein thermoplastisches Vinylaromat-Copolymer A erhalten wird.
Die thermoplastischen Formmassen können zur Herstellung von Formkörpern wie Platten oder Halbzeugen, Folien, Fasern oder auch Schäumen und den entsprechenden Formkörpern wie Platten, Halbzeugen, Folien, Fasern oder Schäumen verwendet werden. Die Verarbeitung kann nach den bekannten Verfahren der thermoplastischen Verarbeitung erfolgen, insbesondere kann die Herstellung durch Tiefziehen, Extrudieren, Spritzgießen, Kalandrieren, Blasformen, Pressen, Presssintern oder Sintern, vorzugsweise durch Spritzgießen, erfolgen.
Die erfindungsgemäßen Formmassen können zur Herstellung von Formkörpern jeglicher Art verwendet werden. Diese können über Spritzguss-, Extrusions- und Blasformverfahren hergestellt werden. Eine weitere Verarbeitungsart ist die Herstellung von Formteilen durch Thermoformen aus zuvor hergestellten Platten oder Folien und das Verfahren des Folienumspritzens.

Beispiele für diese Formteile sind Folien, Profile, Gehäuseteile jeglicher Art, z.B. für Haushaltsgeräte wie Saftpressen, Kaffeemaschinen, Mixer; für Bürogeräte wie Monitore, Drucker, Kopierer; Außen- und Innenteile von Kraftfahrzeugen; Bleche, Rohre, Elektroinstallationskanäle, Fenster, Türen und andere Profile für den Baubereich (Innenausbau und Außenanwendungen) sowie Teile für elektrische und elektronische Anwendungen wie Schalter, Stecker und Steckdosen.

Insbesondere können die erfindungsgemäßen Formmassen beispielsweise zur Herstellung folgender Formkörper verwendet werden: Teile für die Innenausstattung von Schienenfahrzeugen, Schiffen, Flugzeugen, Bussen und anderen Kraftfahrzeugen, Karosserieteile für Motoren Fahrzeuge, Gehäuse für elektrische Geräte mit Kleintransformatoren, Gehäuse für Geräte zur Verarbeitung und Übertragung von Informationen, Gehäuse und Verkleidungen für medizinische Geräte, Massagegeräte und Gehäuse dafür, Spielzeugfahrzeuge für Kinder, flächige Wandelemente, Gehäuse - Formteile für Sicherheitseinrichtungen, wärmeisolierte Transportbehälter, Apparate zur Haltung oder Pflege von Kleintieren, Formteile für Sanitär- und Badeinrichtungen, Schutzgitter für Lüftungsöffnungen, Formteile für Garten- und Gerätehäuser, Gehäuse für Gartengeräte.

Die Erfindung wird detaillierter durch die folgenden Beispiele und Ansprüche beschrieben. Im Folgenden ist unter "Teile", Gewichtsteile zu verstehen, wenn nicht anders angegeben.

Beispiele

Beispiel 1 (erfindungsgemäß, Nachdosierung Styrol (incl. Schritt a3-2))

Herstellung von Styrol-Co-Acrylnitril-gepfropften Polybutylacrylat-Latices (Pfropfcopolymer B-1)

Der folgende Pfropfcopolymer-B-Latex wurde wie folgt hergestellt:

Saatlatex BS

Das Reaktionsgefäß wurde mit 132 Teilen demineralisiertem Wasser, 1,0 Teilen des Natriumsalzes einer $C_{12}$-$C_{18}$-Alkylsulfonsäure und 0,41 Teilen Natriumbicarbonat beschickt. Als die Temperatur im Reaktionsgefäß 59°C erreicht hatte, wurden 0,30 Teile Kaliumpersulfat, gelöst in 9,7 Teilen demineralisiertem Wasser, zugegeben.

Dazu wurde innerhalb von 210 Minuten eine Mischung aus 98 Teilen Butylacrylat und 2 Teilen Tricyclodecenylacrylat gegeben und polymerisiert. Danach wurde die Polymerisation für weitere 60 Minuten fortgesetzt.

Die erhaltene Polymer-Dispersion hatte einen Gesamtfeststoffgehalt von 38,8% und die Latexteilchen hatten einen mittleren Teilchendurchmesser Dv (Volumenmittel (bestimmt durch Lichtstreuung (LS) mittels Beckman Coulter)) von 87 nm.

Pfropfgrundlage B1-1

Das Reaktionsgefäß wurde mit 60,1 Teilen demineralisiertem Wasser, 0,3 Teilen des zuvor beschriebenen Saatlatex (Teilchendurchmesser 87 nm) und 0,21 Teilen Natriumhydrogencarbonat beschickt.

Nach Erhitzen des Reaktionsgefäßes auf 61C wurden 0,18 Teile Kaliumpersulfat, gelöst in 5,8 Teilen demineralisiertem Wasser, zu der Reaktionsmischung gegeben. Dazu wurde innerhalb von 210 Minuten eine Mischung aus 58,9 Teilen Butylacrylat und 1,1 Teilen Tricyclodecenylacrylat gegeben und polymerisiert.

Parallel zum ersten Zulauf wurde noch eine Lösung von 0,38 Teilen des Natriumsalzes einer $C_{12}$-$C_{18}$-Alkyl-sulfonsäure in 21,9 Teilen vollentsalztem Wasser über einen Zeitraum von 210 Minuten zugegeben.

Danach wurde die Reaktion 60 Minuten bei 61 °C fortgesetzt.

Die erhaltene Polymerdispersion (Butylacrylat-Kautschuklatex, Pfropfgrundlage B1-1) hatte einen Gesamtfeststoffgehalt von 39,3 % und der mittlere Teilchendurchmesser Dv (bestimmt mittels LS Beckmann Coulter) der Latexteilchen betrug 440 nm.

(a) Herstellung der Pfropfhülle B2 (2-stufig B2' und B2")

Das Reaktionsgefäß wurde mit 180 Gewichtsteilen demineralisiertem Wasser, 59,9 Gewichtsteilen Pfropfgrundlage B1-1 und 0,11 Gewichtsteilen des Natriumsalzes einer $C_{12}$-$C_{18}$-Paraffinsulfonsäure gefüllt. Nach Erhitzen des Reaktionsgefäßes auf 61°C wurden dem Reaktionsgemisch 0,16 Gewichtsteile Kaliumpersulfat, gelöst in 5,2 Gewichtsteilen entmineralisiertem Wasser, zugesetzt. Innerhalb von 60 Minuten wurden 8,67 Gewichtsteile Styrol bei einer Temperatur von 61°C zugegeben, gefolgt von einer Nachpolymerisationszeit von 30 Minuten bei 61°C. Danach wurde ein Gemisch aus 18,9 Gewichtsteilen Styrol und 8,10 Gewichtsteilen Acrylnitril über einen Zeitraum von 150 min zugegeben, wobei die Temperatur während dieser Zeit kontinuierlich auf 65 °C erhöht wird. Im Anschluss daran wurden 4,33 Gewichtsteile Styrol über einen Zeitraum von 30 Minuten zugegeben. Die Reaktion wurde bei 65°C für weitere 60 Minuten fortgesetzt. Es wurde eine Dispersion eines Pfropfcopolymers B-1 erhalten.

Die Latexpartikel B-1 hatten einen mittleren Durchmesser Dv von 556 nm (bestimmt mittels LS Beckman Coulter). Ein Aliquot wurde entnommen, um den Acrylnitril(AN)-Restmonomergehalt direkt nach der Nachpolymerisationszeit bei 65 °C zu bestimmen.

b) Fällung des Pfropfcopolymer B-Latex

110 g einer MgSO4-Lösung (20,3 Gew.-%) wurden mit 1850 g demineralisiertem Wasser vermischt. 390 g dieser Lösung wurden als Vorbeschickung verwendet und auf 70 °C erhitzt. 800 g des Polymerlatex aus Schritt a) und die restliche verdünnte $MgSO_4$-Lösung wurden getrennt innerhalb von 10 Minuten zugegeben, während die Temperatur bei 70°C gehalten wird.

c) Sinterung der Fällungsmischung und d) Abkühlen

Die in Schritt b) erhaltene Fällungsmischung wurde innerhalb von 30 Minuten auf eine Temperatur von 124°C erhitzt (Sinterung) und nach Erreichen einer Temperatur von 124 °C wurde das Heizen gestoppt und man ließ die Fällungsmischung auf Raumtemperatur abkühlen.

e) Entwässerung, f) Waschen und g) Trocknen

Die erhaltene (gesinterte und abgekühlte) Fällungsmischung wurde zentrifugiert. Das entwässerte, gewaschene Pfropfcopolymer B wurde in einem Laborofen bei 70°C für 2 Tage getrocknet und ein Pulver des Pfropfcopolymers B erhalten. Das getrocknete Pfropfcopolymer B hatte einen Wassergehalt < 1 Gew.-%.

Vergleichsbeispiel C1

Herstellung eines Pfropfcopolymers B-C1 (ohne Nachdosierung Styrol)

Die Herstellung eines Pfropfcopolymers B mit einer 2-stufigen Pfropfhülle B2' und B2" erfolgte analog zu Beispiel 1, allerdings wurde in Schritt a) kein Styrol nachdosiert, d.h. Schritt a3-2) ist nicht vorhanden. Das Reaktionsgefäß wurde mit 180 Gewichtsteilen demineralisiertem Wasser, 59,9 Gewichtsteilen Pfropfgrundlage B1-1 und 0,11 Gewichtsteilen des Natriumsalzes einer $C_{12}$-$C_{18}$-Paraffinsulfonsäure gefüllt. Nach Erhitzen des Reaktionsgefäßes auf 61°C wurden dem Reaktionsgemisch 0,16 Gewichtsteile Kaliumpersulfat, gelöst in 5,2 Gewichtsteilen entmineralisiertem Wasser, zugesetzt. Innerhalb von 60 Minuten wurden 13,0 Gewichtsteile Styrol bei einer Temperatur von 61°C zugegeben, gefolgt von einer Nachpolymerisationszeit von 30 Minuten bei 61°C. Dann wurde ein Gemisch aus 18,9 Gewichtsteilen Styrol und 8,10 Gewichtsteilen Acrylnitril über einen Zeitraum von 150 Minuten zugegeben, wobei die Temperatur während dieser Zeit kontinuierlich auf 65 °C erhöht wird. Die Reaktion wurde bei 65°C für weitere 60 Minuten fortgesetzt. Es wurde eine Dispersion eines Pfropfcopolymers B-C1 erhalten. Die Latexpartikel B-C1 hatten einen mittleren Durchmesser von 558 nm (bestimmt mittels LS Beckman Coulter). Ein Aliquot wurde entnommen, um den AN-Restmonomergehalt direkt nach der Nachpolymerisationszeit bei 65 °C zu bestimmen. Die übrigen Schritte b) bis g) wurden analog zu Beispiel 1 durchgeführt.

Vergleichsbeispiel C2

Herstellung eines Pfropfcopolymers B-C2 (Vergleich, Nachdosierung MMA)

Die Herstellung eines Pfropfcopolymers B mit einer 2-stufigen Pfropfhülle B2' und B2" erfolgte analog zu Beispiel 1, allerdings wurde in Schritt a3-2) kein Styrol, sondern Methylmethacrylat (MMA) nachdosiert.

Das Reaktionsgefäß wurde mit 180 Gewichtsteilen demineralisiertem Wasser, 59,9

Gewichtsteilen Pfropfgrundlage B1-1 und 0,11 Gewichtsteilen des Natriumsalzes einer $C_{12}$-$C_{18}$-Paraffinsulfonsäure gefüllt. Nach Erhitzen des Reaktionsgefäßes auf 61°C wurden dem Reaktionsgemisch 0,16 Gewichtsteile Kaliumpersulfat, gelöst in 5,2 Gewichtsteilen entmineralisiertem Wasser, zugesetzt. Innerhalb von 60 Minuten wurden 8,67 Gewichtsteile Styrol bei einer Temperatur von 61°C zugegeben, gefolgt von einer Nachpolymerisationszeit von 30 Minuten bei 61°C. Danach wurde ein Gemisch aus 18,9 Gewichtsteilen Styrol und 8,10 Gewichtsteilen Acrylnitril über einen Zeitraum von 150 min zugegeben, wobei die Temperatur während dieser Zeit kontinuierlich auf 65 °C erhöht wird. Im Anschluss daran wurden 4,33 Gewichtsteile Methylmethacrylat über einen Zeitraum von 30 Minuten zugegeben. Die Reaktion wurde bei 65°C für weitere 60 Minuten fortgesetzt.

Es wurde eine Dispersion eines Pfropfcopolymers B-C2 erhalten. Die Latexpartikel B-C2 hatten einen mittleren Durchmesser von 554 nm (bestimmt mittels LS Beckman Coulter). Ein Aliquot wurde entnommen, um den AN-Restmonomergehalt direkt nach der Nachpolymerisationszeit bei 65 °C zu bestimmen.

Die übrigen Schritte b) bis g) wurden analog zu Beispiel 1 durchgeführt.

Der Acrylnitril (AN)-Restmonomer (REMO)-Gehalt (s. Tabelle 1) wurde durch Headspace Gaschromatographie mit Flammenionisationsdetektor (GC-FID) mit externer Kalibrierung unter Verwendung von Mesitylen und Proprionitril als internem Standard (= IS)-Lösung in DMSO ermittelt.

Dazu wurde 1,00 g der Latexdispersion B1, B-C1 bzw. B-C2 mit ca. 5,00 g IS-Lösung versetzt. Die erhaltene Mischung wurde geschüttelt und der REMO AN-Gehalt mittels Headspace GC-FID gemessen.

REMO-AN nach 300 Minuten basierend auf

$$tsc\ [ppm] = m(AN)/m(Latex) \times tsc/100 \times 1000000$$

m(AN): Masse AN in der Latexprobe, berechnet durch interne Kalibrierung mit Mesitylen und Propionitril
m(Latex): Gesamtmenge des für die Analyse verwendeten Latex tsc (total solid content): Gesamtfeststoffgehalt

Der Yellowness-Index (YI) wurde für die erhaltenen Pfropfcopolymere B1, B-C1 bzw. B-C2 gemäß ASTM E313-10 ermittelt (s. Tabelle 1). Dazu wurde das jeweilige Pfropfcopolymerpulver zwischen 2 Objektträgern fixiert.

Tabelle 1

| Pfropfcopolymer | B-C1 | B-1 | B-C2 |
|---|---|---|---|
| Reaktion | ohne Nachdosierung | Styrol-Nachdosierung | MMA-Nachdosierung |
| YI (Pulver) nach Sinterung | 3.29 | 1.89 | 2.35 |
| tsc (%) nach 300 min | 34.34 | 34.30 | 34.06 |
| REMO AN [ppm] nach 300 min | 6049 | 2564 | 5217 |

Die Beispiele (s. Tabelle 1) zeigen, dass der Acrylnitril-Restmonomer (REMO AN)-Gehalt des nach dem erfindungsgemäßen Verfahren erhaltenen Pfropfcopolymers B-1 sehr viel niedriger ist als der REMO AN-Gehalt der Vergleichsbeispiele B-C1 und B-C2.

Ferner nimmt der Gelbwert (YI) des Pfropfcopolymer-Pulvers deutlich ab (s. Beispiel Pfropfcopolymer B-1), wenn gemäß dem erfindungsgemäßen Verfahrens ein Teil des zur Herstellung der Pfropfhülle verwendeten Styrols erst nach der Zugabe der Styrol-Acrylnitril-Mischung zudosiert wird.

Das ist besonders überraschend, da bei Nachdosierung von MMA ein so stark ausgeprägter Effekt nicht gefunden wird (s. Vergleichsbeispiel B-C2).

Je höher der Gelbwert eines polymeren Materials ist, desto schwieriger ist es, das Material in einer bestimmten Farbe einzufärben.

Die erfindungsgemäßen Pfropfcopolymere oder diese enthaltende Formmassen haben eine helle, oftmals weiße oder nahezu weiße Grundfarbe, wodurch sie gut in einem breiten Farbspektrum eingefärbt und vielfältig angewendet werden können.

Verschiedene ASA-Copolymere wurden nach dem erfindungsgemäßen Verfahren hergestellt und getestet, sie hatten verbesserte Farbeigenschaften.

Auch wurden Formteile aus den ASA-Copolymeren gemäß erfindungsgemäßen Verfahren hergestellt und getestet, sie hatten u.a. verbesserte Farbeigenschaften.

**Patentansprüche**

1.  Verfahren zur Herstellung mindestens eines Pfropfcopolymers B enthaltend:

    B1: 40 bis 90 Gew.-%, bevorzugt 45 bis 85 Gew.-%, besonders bevorzugt 50 bis 70 Gew.-%, bezogen auf das Pfropfcopolymer B, mindestens einer, bevorzugt einer, Pfropfgrundlage B1, erhalten durch Emulsionspolymerisation von:

B11 50 bis 100 Gew.-%, bezogen auf die Pfropfgrundlage B1, mindestens eines Monomers B11 ausgewählt aus $C_1$-$C_8$-Alkyl(meth)acrylat und Butadien;

B12 0 bis 10 Gew.-%, bezogen auf die Pfropfgrundlage B1, mindestens eines mehrfunktionellen Vernetzungsmonomers B12, vorzugsweise ausgewählt aus Allyl(meth)acrylat, Divinylbenzol, Diallylmaleat, Diallylfumarat, Diallylphthalat, Triallylcyanurat, Triallylisocyanurat und Dihydrodicyclopentadienylacrylat (DCPA);

B13 0 bis 50 Gew.-%, bezogen auf die Pfropfgrundlage B1, mindestens eines weiteren Monomers B13 ausgewählt aus Styrol, alpha-Methylstyrol, $C_1$-$C_4$-Alkylstyrol, Acrylnitril, Methacrylnitril, Isopren, Chloropren, Methylmethacrylat, Alkylenglykoldi(meth)acrylat und Vinylmethylether;

wobei die Summe von B11, B12 und B13 100 Gew.-% ist; und

B2: 10 bis 60 Gew.-%, bezogen auf das Pfropfcopolymer B, mindestens einer Pfropfhülle B2, die - in Gegenwart der mindestens einen Pfropfgrundlage B1 - erhalten wird durch Emulsionspolymerisation von:

B21 50 bis 100 Gew.-%, bezogen auf die Pfropfhülle B2, mindestens eines vinylaromatischen Monomeren B21, ausgewählt aus Styrol und alpha-Methylstyrol; und

B22 0 bis 50 Gew.-%, bezogen auf die Pfropfhülle B2, mindestens eines Monomers B22 ausgewählt aus Acrylnitril oder Mischungen aus Acrylnitril und mindestens einem weiteren Monomer ausgewählt aus Methacrylnitril, Acrylamid, Vinylmethylether, Anhydriden ungesättigter Carbonsäuren und Imiden ungesättigter Carbonsäuren;

wobei die Summe von B21 und B22 100 Gew.-% ist; und

wobei mindestens eine Pfropfhülle B2 durch Emulsionspolymerisation von 50 bis 95 Gew.-% mindestens eines Monomers B21 und 5 bis 50 Gew.-% mindestens eines Monomers B22 erhalten wird;

wobei die Summe der mindestens einen Pfropfgrundlage B1 und der mindestens einen Pfropfhülle B2 100 Gew.-% ergibt; und wobei

das Verfahren die folgenden Schritte umfasst:

a) Herstellung eines Latex mindestens eines Pfropfcopolymers B umfassend:

a1) Vorlage eines wässrigen Latex enthaltend mindestens eine Pfropfgrundlage B1;

a2) gegebenenfalls Herstellung einer ersten Pfropfhülle B2 bzw. B2' durch:

a2-1) Zugabe und Emulsionspolymerisation eines ersten Teils des mindestens einen Monomers B21 bzw. B21', bevorzugt Styrol, zu der Pfropfgrundlage B1;

a2-2) Nachpolymerisation des in a2-1) erhaltenen Latex;

a3) Herstellung einer ersten Pfropfhülle B2 oder, falls die Schritte a2-1) und a2-2 vorhanden sind, Herstellung einer zweiten Pfropfhülle B2 bzw. B2" durch:

a3-1) simultane Zugabe und Emulsionspolymerisation eines ersten oder eines weiteren Teils des mindestens einen Monomers B21 bzw. B21" und der Gesamtmenge des mindestens einen Monomers B22 bzw. B22" zu dem Latex aus Schritt a1) bzw. a2-2);

a3-2) unmittelbar nach Beendigung der Zugabe der Monomere in Schritt a3-1), Zugabe und Emulsionspolymerisation des restlichen Teils des mindestens einen Monomers B21 bzw. B21" zu dem in Schritt a3-1) erhaltenen Latex;

a3-3) Nachpolymerisation des in Schritt 3-2) erhaltenen Latex des Pfropfcopolymers B.

2. Verfahren gemäß Anspruch 1, welches ferner die folgenden Schritte b) bis g) umfasst:

b) Fällung des in Schritt a) erhaltenen Pfropfcopolymer-B-Latex bei einer Temperatur von 30 bis 95°C, wobei der Pfropfcopolymer-B-Latex mit mindestens einer Fällungslösung PS gemischt wird, wodurch eine Fällungsmischung entsteht;

c) Sinterung der in Schritt b) erhaltenen Fällungsmischung bei einer Temperatur von 85 bis 150°C, bevorzugt für 15 bis 90 Minuten,

wobei die Temperatur in Schritt c) mindestens 5°C höher ist als in Schritt b);

d) gegebenenfalls Abkühlen der gesinterten Fällungsmischung aus Schritt c), vorzugsweise auf eine Temperatur von 20 bis 90°C;

e) mechanische Entwässerung der in Schritt c) oder d) erhaltenen gesinterten Fällungsmischung, wobei ein Pfropfcopolymer B mit einem Wassergehalt gleich oder kleiner 50 Gew.-% erhalten wird;

f) gegebenenfalls Waschen des Pfropfcopolymers B, erhalten in Schritt e);

g) gegebenenfalls Trocknen des in Schritt e) oder f) erhaltenen Pfropfcopolymers B.

3. Verfahren nach Anspruch 1 oder 2, **dadurch gekennzeichnet, dass** die mindestens eine Pfropfgrundlage B1 durch Emulsionspolymerisation erhalten wird von:

B11: 80 bis 99,9 Gew.-%, bezogen auf die Pfropfgrundlage B1, mindestens eines $C_1$-$C_8$-Alkyl(meth)acrylats als Monomer B11;

B12: 0,1 bis 10 Gew.-%, bezogen auf die Pfropfgrundlage B1, mindestens eines polyfunktionellen Vernetzungsmonomers B12;

B13: 0 bis 19,9 Gew.-%, bezogen auf die Pfropfgrundlage B1, mindestens eines weiteren Monomeren, ausgewählt aus Styrol, alpha-Methylstyrol, $C_1$-$C_4$-Alkylstyrol, Acrylnitril, Methacrylnitril, Isopren, Chloropren, Methylmethacrylat, Alkylenglykoldi(meth)acrylat und Vinylmethylether;

wobei die Summe von B11, B12 und B13 gleich 100 Gew.-% ist.

4. Verfahren nach einem der Ansprüche 1 bis 3, **dadurch gekennzeichnet, dass** das mindestens eine Pfropfcopolymer B enthält:

B1: 50 bis 70 Gew.-%, bezogen auf das Pfropfcopolymer B, genau einer Pfropfgrundlage B1; und

B2: 30 bis 50 Gew.-%, bezogen auf das Pfropfcopolymer B, genau einer Pfropfhülle B2 erhalten durch Emulsionspolymerisation - in Gegenwart der Pfropfgrundlage B1 - von:

B21: 50 bis 95 Gew.-%, bezogen auf die Pfropfhülle B2, mindestens eines vinylaromatischen Monomeren B21, ausgewählt aus Styrol und (alpha)-Methylstyrol; und

B22: 5 bis 50 Gew.-%, bezogen auf die Pfropfhülle B2, mindestens eines Monomers B22, ausgewählt aus Acrylnitril oder Mischungen aus Acrylnitril und Methacrylnitril;

wobei die Gesamtsumme aus Pfropfgrundlage B1 und Pfropfhülle B2 100 Gew.-% beträgt, und wobei der in Schritt a) erhaltene Latex des Pfropfcopolymers B eine mittels Lichtstreuung bestimmte Teilchengröße im Bereich von 60 bis 200 nm aufweist.

5. Verfahren nach einem der Ansprüche 1 bis 3, **dadurch gekennzeichnet, dass** das Pfropfcopolymer B enthält:

B1: 50 bis 70 Gew.-%, bezogen auf das Pfropfcopolymer B, mindestens einer Pfropfgrundlage B1; und

B2': 5 bis 25 Gew.-%, bezogen auf das Pfropfcopolymer B, mindestens einer Pfropfhülle B2', erhalten durch Emulsionspolymerisation - in Gegenwart von Pfropfgrundlage B1 - von:

B21': 100 Gew.-%, bezogen auf Pfropfhülle B2', mindestens eines vinylaromatischen Monomers B21, ausgewählt aus Styrol und (alpha)-Methylstyrol; und

B2": 20 bis 40 Gew.-%, bezogen auf das Pfropfcopolymer B, mindestens einer Pfropfhülle B2", erhalten durch Emulsionspolymerisation - in Gegenwart von mit B2' gepfropfter Pfropfgrundlage B1 - von:

B21": 65 bis 90 Gew.-%, bezogen auf die Pfropfhülle B2", mindestens eines vinylaromatischen Monomers B21", ausgewählt aus Styrol und (alpha)-Methylstyrol; und

B22": 10 bis 35 Gew.-%, bezogen auf die Pfropfhülle B2", mindestens eines Monomers B22", ausgewählt aus Acrylnitril oder Mischungen aus Acrylnitril und Methacrylnitril;

wobei die Gesamtsumme aus Pfropfgrundlage B1, Pfropfhülle B2' und Pfropfhülle B2" 100 Gew.-% beträgt, und wobei der in Schritt a) erhaltene Latex des Pfropfcopolymers B eine mittels Lichtstreuung bestimmte Teilchengröße im Bereich von 300 bis 800 nm aufweist.

6. Verfahren nach einem der Ansprüche 1 bis 5, **dadurch gekennzeichnet, dass** das Monomer B21 bzw. B21' und B21" Styrol ist, und das Monomer B22 bzw. B22" Acrylnitril ist.

7. Verfahren nach einem der Ansprüche 1 bis 6, **dadurch gekennzeichnet, dass** in Schritt a3-2) die Zugabe des restlichen Teils des mindestens einen Monomers B21 bzw. B21", bevorzugt Styrol, im Allgemeinen über einen Zeitraum von 5 bis 45 Minuten, bevorzugt 10 bis 35 Minuten, erfolgt.

8. Verfahren nach einem der Ansprüche 1 bis 6, **dadurch gekennzeichnet, dass** in Schritt a3-3) die Nachpolymerisation des in Schritt 3-2) erhaltenen Latex des Pfropfcopolymers B für mindestens 15 Minuten, bevorzugt für 20 bis 90 Minuten, ganz besonders bevorzugt für 30 bis 60 Minuten, erfolgt.

9. Verfahren nach einem der Ansprüche 1 bis 7, **dadurch gekennzeichnet, dass** in Schritt a3-2) der restliche Teil des mindestens einen Monomers B21 bzw. B21" bis zu 5 Gew.-%, vorzugsweise 1 bis 4,5 Gew.-%, bezogen auf das Pfropfcopolymer B, beträgt.

10. Verfahren nach einem der Ansprüche 1 und 2 und 4 bis 8, **dadurch gekennzeichnet, dass** Schritt a2) vorhanden ist und in Schritt a3) die Herstellung einer zweiten Pfropfhülle B2" erfolgt.

11. Verfahren nach einem der Ansprüche 1 bis 9, **dadurch gekennzeichnet, dass** in Schritt a3) die Temperatur 40 bis 90°C, bevorzugt 50 bis 80°C, beträgt und vorzugsweise mindestens 2°C, bevorzugt 3 bis 4 °C, höher ist als die Temperatur in Schritt a2).

12. Verfahren nach einem der Ansprüche 2 bis 11, **dadurch gekennzeichnet, dass** in Schritt b) die Fällung des Pfropfcopolymer-B-Latex bei einer Temperatur von 40 bis 90°C, bevorzugt 50 bis 90°C, erfolgt.

13. Verfahren nach einem der Ansprüche 2 bis 12, **dadurch gekennzeichnet, dass** in Schritt c) die Sinterung der Fällungsmischung bei einer Temperatur von 90 bis 145 °C, insbesondere 90 bis 140°C, für 15 bis 90 Minuten, bevorzugt 15 bis 75 Minuten, erfolgt.

14. Pfropfcopolymer B, erhalten durch ein Verfahren gemäß einem der Ansprüche 1 bis 13.

15. Verfahren zur Herstellung einer thermoplastischen Formmasse - enthaltend mindestens ein Pfropfcopolymer B gemäß Anspruch 14, und mindestens ein, vorzugsweise kautschukfreies, thermoplastisches Vinylaromat-Copolymer A, optional mindestens eine weitere polymere Komponente C ausgewählt aus Polycarbonaten, Polyamiden und Polyestern, und optional ein oder mehrere Additive und/oder Hilfsmittel D - durch Mischen der Komponenten, vorzugsweise in der Schmelze.

16. Thermoplastische Formmasse, erhalten durch ein Verfahren nach Anspruch 15.

17. Formteil aus einer thermoplastischen Formmasse gemäß Anspruch 16.


**Claims**

1. Process for the preparation of at least one graft copolymer B comprising:

   B1: 40 to 90% by weight, preferably 45 to 85% by weight, particularly preferably 50 to 70% by weight, based on the graft copolymer B, of at least one, preferably one, graft base B1, obtained by emulsion polymerization of:

   B11 50 to 100% by weight, based on the graft base B1, of at least one monomer B11 selected from $C_1$-$C_8$ alkyl (meth)acrylate and butadiene;
   B12 0 to 10% by weight, based on the graft base B1, of at least one multifunctional crosslinking monomer B12, preferably selected from allyl (meth)acrylate, divinylbenzene, diallyl maleate, diallyl fumarate, diallyl phthalate, triallyl cyanurate, triallyl isocyanurate and dihydrodicyclopenta-dienyl acrylate (DCPA);
   B13 0 to 50% by weight, based on the graft base B1, of at least one further monomer B13 selected from styrene, alpha-methylstyrene, $C_1$-$C_4$-alkylstyrene, acrylonitrile, methacrylonitrile, isoprene, chloroprene, methyl methacrylate, alkylene glycol di(meth)acrylate and vinyl methyl ether;

   wherein the sum of B11, B12 and B13 is 100% by weight; and
   B2: 10 to 60% by weight, based on the graft copolymer B, of at least one graft shell B2 which - in the presence of the at least one graft base B1 - is obtained by emulsion polymerization of:

B21 50 to 100% by weight, based on the graft shell B2, of at least one vinylaromatic monomer B21 selected from styrene and alpha-methylstyrene; and
B22 0 to 50% by weight, based on the graft shell B2, of at least one monomer B22 selected from acrylonitrile or mixtures of acrylonitrile and at least one further monomer selected from methacrylonitrile, acrylamide, vinyl methyl ether, anhydrides of unsaturated carboxylic acids and imides of unsaturated carboxylic acids; wherein the sum of B21 and B22 is 100% by weight; and

wherein at least one graft shell B2 is obtained by emulsion polymerization of 50 to 95% by weight of at least one monomer B21 and 5 to 50% by weight of at least one monomer B22;
wherein the sum of the at least one graft base B1 and the at least one graft shell B2 is 100% by weight; and wherein

the process comprises the following steps:

a) preparation of a latex of at least one graft copolymer B comprising:

a1) presentation of an aqueous latex containing at least one graft base B1;
a2) optionally preparation of a first graft shell B2 or B2' by:

a2-1) addition and emulsion polymerization of a first part of the at least one monomer B21 or B21', preferably styrene, to the graft base B1;
a2-2) post-polymerization of the latex obtained in a2-1);

a3) preparation of a first graft shell B2 or, if steps a2-1) and a2-2 are present, preparation of a second graft shell B2 or B2" by:

a3-1) simultaneous addition and emulsion polymerization of a first or a further portion of the at least one monomer B21 or B21" and the total amount of the at least one monomer B22 or B22" to the latex from step a1) or a2-2);
a3-2) immediately after completion of the addition of the monomers in step a3-1), addition and emulsion polymerization of the remaining part of the at least one monomer B21 or B21" to the latex obtained in step a3-1);
a3-3) post-polymerization of the latex of graft copolymer B obtained in step 3-2).

2. Process according to claim 1, further comprising the following steps b) to g):

b) precipitation of the graft copolymer B latex obtained in step a) at a temperature of 30 to 95 °C, wherein the graft copolymer B latex is mixed with at least one precipitation solution PS, thereby forming a precipitation mixture;
c) sintering of the precipitation mixture obtained in step b) at a temperature of 85 to 150 °C, preferably for 15 to 90 minutes, wherein the temperature in step c) is at least 5 °C higher than in step b);

d) optionally cooling the sintered precipitation mixture from step c), preferably to a temperature of 20 to 90 °C;
e) mechanical dewatering of the sintered precipitation mixture obtained in step c) or d), wherein a graft copolymer B with a water content equal to or less than 50% by weight is obtained;
f) optionally washing the graft copolymer B obtained in step e);
g) optionally drying the graft copolymer B obtained in step e) or f).

3. Process according to claim 1 or 2, **characterized in that** the at least one graft base B1 is obtained by emulsion polymerization of:

B11: 80 to 99.9% by weight, based on the graft base B1, of at least one $C_1$-$C_8$ alkyl (meth)acrylate as monomer B11;
B12: 0.1 to 10% by weight, based on the graft base B1, of at least one polyfunctional crosslinking monomer B12;
B13: 0 to 19.9% by weight, based on the graft base B1, of at least one further monomer selected from styrene, alpha-methylstyrene, $C_1$-$C_4$ alkylstyrene, acrylonitrile, methacrylonitrile, isoprene, chloroprene, methyl methacrylate, alkylene glycol di(meth)acrylate and vinyl methyl ether;

wherein the sum of B11, B12 and B13 is equal to 100% by weight.

4. Process according to one of claims 1 to 3, **characterized in that** the at least one graft copolymer B contains:

B1: 50 to 70% by weight, based on the graft copolymer B, of exactly one graft base B1; und
B2: 30 to 50% by weight, based on the graft copolymer B, of exactly one graft shell B2 obtained by emulsion polymerization - in the presence of the graft base B1 - of:

B21: 50 to 95% by weight, based on the graft shell B2, of at least one vinylaromatic monomer B21 selected from styrene and (alpha)-methylstyrene; and
B22: 5 to 50% by weight, based on the graft shell B2, of at least one monomer B22 selected from acrylonitrile or mixtures of acrylonitrile and methacrylonitrile;

wherein the total sum of graft base B1 and graft shell B2 is 100% by weight, and wherein the latex of the graft copolymer B obtained in step a) has a particle size in the range from 60 to 200 nm as determined by light scattering.

5. Process according to one of claims 1 to 3, **characterized in that** the graft copolymer B contains:

B1: 50 to 70% by weight, based on the graft copolymer B, of at least one graft base B1; and
B2': 5 to 25% by weight, based on the graft copolymer B, of at least one graft shell B2', obtained by emulsion polymerization - in the presence of graft base B1 - of:
B21': 100% by weight, based on graft shell B2', of at least one vinylaromatic monomer B21 selected from styrene and (alpha)-methylstyrene; and

B2": 20 to 40% by weight, based on the graft copolymer B, of at least one graft shell B2", obtained by emulsion polymerization - in the presence of graft base B1 grafted with B2' - of:

B21": 65 to 90% by weight, based on the graft shell B2", of at least one vinylaromatic monomer B21" selected from styrene and (alpha)-methylstyrene; and
B22": 10 to 35% by weight, based on the graft shell B2", of at least one monomer B22" selected from acrylonitrile or mixtures of acrylonitrile and methacrylonitrile;

wherein the total sum of graft base B1, graft shell B2' and graft shell B2" is 100% by weight, and wherein the latex of the graft copolymer B obtained in step a) has a particle size in the range from 300 to 800 nm as determined by light scattering.

6. Process according to any one of claims 1 to 5, **characterized in that** the monomer B21 or B21' and B21" is styrene, and the monomer B22 or B22" is acrylonitrile.

7. Process according to any one of claims 1 to 6, **characterized in that** in step a3-2) the addition of the remaining part of the at least one monomer B21 or B21", preferably styrene, generally takes place over a period of 5 to 45 minutes, preferably 10 to 35 minutes.

8. Process according to one of claims 1 to 6, **characterized in that** in step a3-3) the post-polymerization of the latex of the graft copolymer B obtained in step 3-2) takes place for at least 15 minutes, preferably for 20 to 90 minutes, most preferably for 30 to 60 minutes.

9. Process according to one of claims 1 to 7, **characterized in that** in step a3-2) the remaining part of the at least one monomer B21 or B21" is up to 5% by weight, preferably 1 to 4.5% by weight, based on the graft copolymer B.

10. Process according to one of claims 1 and 2 and 4 to 8, **characterized in that** step a2) is present and in step a3) a second graft shell B2" is prepared.

11. Process according to one of claims 1 to 9, **characterized in that** in step a3) the temperature is 40 to 90 °C, preferably 50 to 80 °C, and preferably at least 2 °C, preferably 3 to 4 °C, higher than the temperature in step a2).

12. Process according to one of claims 2 to 11, **characterized in that** in step b) the precipitation of the graft copolymer B latex takes place at a temperature of 40 to 90 °C, preferably 50 to 90 °C.

13. Process according to one of claims 2 to 12, **characterized in that** in step c) the precipitation mixture is sintered at a temperature of 90 to 145°C, in particular 90 to 140°C, for 15 to 90 minutes, preferably 15 to 75 minutes.

14. Graft copolymer B obtained by a process according to any one of claims 1 to 13.

15. Process for preparing a thermoplastic molding composition - comprising at least one graft copolymer B according to claim 14, and at least one, preferably rubber-free, thermoplastic vinylaromatic copolymer A, optionally at least one further polymeric component C selected from polycarbonates, polyamides and polyesters, and optionally one or more additives and/or auxiliaries D - by mixing the components, preferably in the melt.

16. Thermoplastic molding composition obtained by a process according to claim 15.

17. Molding made of a thermoplastic molding composition according to claim 16.

**Revendications**

1. Procédé de préparation d'au moins un copolymère greffé B comprenant :

B1 : 40 à 90 % en poids, de préférence 45 à 85 % en poids, de manière particulièrement préférée 50 à 70 % en poids, par rapport au copolymère greffé B, d'au moins une, de préférence une, base de greffage B1, obtenue par polymérisation en émulsion de :

B11 50 à 100 % en poids, par rapport à la base de greffage B1, d'au moins un monomère B11 choisi parmi le (méth)acrylate d'alkyle en $C_1$-$C_8$ et le butadiène ;
B12 0 à 10 % en poids, par rapport à la base de greffage B1, d'au moins un monomère de réticulation multifonctionnel B12, de préférence choisi parmi le (méth)acrylate d'allyle, le divinylbenzène, le maléate de diallyle, le fumarate de diallyle, le phtalate de diallyle, le cyanurate de triallyle, l'isocyanurate de triallyle et l'acrylate de dihydrodicyclopentadiényle (DCPA) ;
B13 0 à 50 % en poids, par rapport à la base de greffage B1, d'au moins un autre monomère B13 choisi parmi le styrène, l'alpha-méthylsty-rène, l'alkylstyrène en $C_1$-$C_4$, l'acrylonitrile, le méthacrylonitrile, l'isoprène, le chloroprène, le méthacrylate de méthyle, le di(méth)acrylate d'alky-lèneglycol et le vinyl méthyl éther ;

la somme de B11, B12 et B13 étant égale à 100 % en poids ; et
B2 : 10 à 60 % en poids, par rapport au copolymère greffé B, d'au moins une enveloppe de greffage B2, qui est obtenue - en présence de l'au moins une base de greffage B1 - par polymérisation en émulsion de :

B21 50 à 100 % en poids, par rapport à l'enveloppe de greffage B2, d'au moins un monomère vinylaromatique B21 choisi parmi le styrène et l'alpha-méthylstyrène ; et
B22 0 à 50 % en poids, par rapport à l'enveloppe de greffage B2, d'au moins un monomère B22 choisi parmi l'acrylonitrile ou des mélanges d'acrylonitrile et d'au moins un autre monomère choisi parmi le méthacrylonitrile, l'acrylamide, le vinyl méthyl éther, les anhydrides d'acides carboxyliques insaturés et les imides d'acides carboxyliques insaturés ;
la somme de B21 et B22 étant égale à 100 % en poids ; et au moins une enveloppe de greffage B2 étant obtenue par polymérisation en émulsion de 50 à 95 % en poids d'au moins un monomère B21 et de 5 à 50 % en poids d'au moins un monomère B22 ;

la somme de ladite au moins une base de greffage B1 et de ladite au moins une enveloppe de greffage B2 étant égale à 100 % en poids ; et

le procédé comprenant les étapes suivantes :

a) préparation d'un latex d'au moins un copolymère greffé B comprenant :

a1) présentation d'un latex aqueux contenant au moins une base de greffage B1 ;
a2) éventuellement, préparation d'une première enveloppe de greffage B2 ou B2' par:

a2-1) addition et polymérisation en émulsion d'une première partie dudit au moins un monomère B21 ou B21', de préférence du styrène, à ladite base de greffage B1 ;

a2-2) post-polymérisation du latex obtenu en a2-1) ;

a3) préparation d'une première enveloppe de greffage B2 ou, si les étapes a2-1) et a2-2 sont présentes, la préparation d'une deuxième enveloppe de greffage B2 ou B2" par :

a3-1) addition simultanée et polymérisation en émulsion d'une première ou d'une autre partie dudit au moins un monomère B21 ou B21" et de la quantité totale dudit au moins un monomère B22 ou B22" audit latex de l'étape a1) ou a2-2), respectivement ;

a3-2) immédiatement après la fin de l'addition des monomères dans l'étape a3-1), addition et polymérisation en émulsion de la partie restante dudit au moins un monomère B21 ou B21" au latex obtenu dans l'étape a3-1) ;

a3-3) post-polymérisation du latex du copolymère greffé B obtenu dans l'étape 3-2).

2. Procédé selon la revendication 1, qui comprend en outre les étapes b) à g) suivantes :

b) précipitation du latex de copolymère greffé B obtenu dans l'étape a) à une température de 30 à 95 °C, le latex de copolymère greffé B étant mélangé avec au moins une solution de précipitation PS, ce qui donne un mélange de précipitation ;

c) frittage du mélange de précipitation obtenu dans l'étape b) à une température de 85 à 150 °C, de préférence pendant 15 à 90 minutes,
la température dans l'étape c) étant supérieure d'au moins 5 °C à celle de l'étape b) ;

d) éventuellement, refroidissement du mélange de précipitation fritté de l'étape c), de préférence à une température de 20 à 90 °C ;

e) déshydratation mécanique du mélange de précipitation fritté obtenu dans l'étape c) ou d), ce qui permet d'obtenir un copolymère greffé B ayant une teneur en eau égale ou inférieure à 50 % en poids ;

f) éventuellement, lavage du copolymère greffé B obtenu dans l'étape e) ;

g) éventuellement, sécher le copolymère greffé B obtenu dans l'étape e) ou f).

3. Procédé selon la revendication 1 ou 2, **caractérisé en ce que** ladite au moins une base de greffage B1 est obtenue par polymérisation en émulsion de :

B11 : 80 à 99,9 % en poids, par rapport à la base de greffage B1, d'au moins un (méth)acrylate d'alkyle en $C_1$-$C_8$ comme monomère B11 ;

B12 : 0,1 à 10 % en poids, par rapport à la base de greffage B1, d'au moins un monomère de réticulation polyfonctionnel B12 ;

B13 : 0 à 19,9 % en poids, par rapport à la base de greffage B1, d'au moins un autre monomère choisi parmi le styrène, l'alpha-méthylstyrène, l'alkylstyrène en $C_1$-$C_4$, l'acrylonitrile, le méthacrylonitrile, l'isoprène, le chloroprène, le méthacrylate de méthyle, le di(méth)acrylate d'alky-lèneglycol et le vinyl méthyl éther ;

la somme de B11, B12 et B13 étant égale à 100 % en poids.

4. Procédé selon l'une des revendications 1 à 3, **caractérisé en ce que** ledit au moins un copolymère greffé B contient :

B1 : 50 à 70 % en poids, par rapport au copolymère greffé B, exactement d'une base de greffage B1 ; et

B2 : 30 à 50 % en poids, par rapport au copolymère greffé B, exactement d'une enveloppe de greffage B2 obtenue par polymérisation en émulsion - en présence de la base de greffage B1 - de :

B21 : 50 à 95 % en poids, par rapport à l'enveloppe de greffage B2, d'au moins un monomère vinylaromatique B21 choisi parmi le styrène et l'(alpha)-méthylstyrène ; et

B22 : 5 à 50 % en poids, par rapport à l'enveloppe de greffage B2, d'au moins un monomère B22 choisi parmi l'acrylonitrile ou des mélanges d'acrylonitrile et de méthacrylonitrile ;

la somme totale de la base de greffage B1 et de l'enveloppe de greffage B2 étant de 100 % en poids, et le latex du copolymère greffé B obtenu dans l'étape a) présentant une taille de particules déterminée par diffusion de la lumière dans la plage de 60 à 200 nm.

5. Procédé selon l'une des revendications 1 à 3, **caractérisé en ce que** le copolymère greffé B contient :

B1 : 50 à 70 % en poids, par rapport au copolymère greffé B, d'au moins une base de greffage B1 ; et

B2' : 5 à 25 % en poids, par rapport au copolymère greffé B, d'au moins une enveloppe de greffage B2' obtenue par polymérisation en émulsion - en présence de base de greffage B1 - de :

B21' : 100 % en poids, par rapport à l'enveloppe de greffage B2', d'au moins un monomère vinylaromatique B21 choisi parmi le styrène et l'(alpha)-méthylstyrène ; et

B2" : 20 à 40 % en poids, par rapport au copolymère greffé B, d'au moins une enveloppe de greffage B2", obtenue par polymérisation en émulsion - en présence d'une base de greffage B1 greffé avec B2' - de :

B21" : 65 à 90 % en poids, par rapport à l'enveloppe de greffage B2", d'au moins un monomère vinylaromatique B21" choisi parmi le styrène et l'(alpha)-méthylstyrène ; et

B22" : 10 à 35 % en poids, par rapport à l'enveloppe de greffage B2", d'au moins un monomère B22" choisi parmi l'acrylonitrile ou des mélanges d'acrylonitrile et de méthacrylonitrile ;

la somme totale de la base de greffage B1, de l'enveloppe de greffage B2' et de l'enveloppe de greffage B2" étant de 100 % en poids, et le latex du copolymère greffé B obtenu dans l'étape a) présentant une taille de particules déterminée par diffusion de la lumière dans la plage de 300 à 800 nm.

6. Procédé selon l'une des revendications 1 à 5, **caractérisé en ce que** le monomère B21 ou B21' et B21" est le styrène, et le monomère B22 ou B22" est l'acrylonitrile.

7. Procédé selon l'une des revendications 1 à 6, **caractérisé en ce que**, dans l'étape a3-2), l'addition de la partie restante dudit au moins un monomère B21 ou B21", de préférence du styrène, est généralement réalisée sur une période de temps de 5 à 45 minutes, de préférence de 10 à 35 minutes.

8. Procédé selon l'une des revendications 1 à 6, **caractérisé en ce que**, à l'étape a3-3), la post-polymérisation du latex de copolymère greffé B obtenu dans l'étape 3-2) est effectuée pendant au moins 15 minutes, de préférence pendant 20 à 90 minutes, de manière tout à fait préférée pendant 30 à 60 minutes.

9. Procédé selon l'une des revendications 1 à 7, **caractérisé en ce que** dans l'étape a3-2), la partie restante dudit au moins un monomère B21 ou B21" représente jusqu'à 5 % en poids, de préférence de 1 à 4,5 % en poids, par rapport au copolymère greffé B.

10. Procédé selon l'une des revendications 1 et 2 et 4 à 8, **caractérisé en ce que** l'étape a2) est présente et **en ce que** la préparation d'une deuxième enveloppe de greffage B2" est réalisée dans l'étape a3).

11. Procédé selon l'une des revendications 1 à 9, **caractérisé en ce que**, dans l'étape a3), la température est comprise entre 40 et 90 °C, de préférence entre 50 et 80 °C, et est de préférence supérieure d'au moins 2 °C, de préférence de 3 à 4 °C, à la température de l'étape a2).

12. Procédé selon l'une des revendications 2 à 11, **caractérisé en ce que**, dans l'étape b), la précipitation du latex de copolymère greffé B est réalisée à une température de 40 à 90 °C, de préférence de 50 à 90° C.

13. Procédé selon l'une des revendications 2 à 12, **caractérisé en ce que**, dans l'étape c), le frittage du mélange de précipitation est réalisé à une température de 90 à 145 °C, en particulier de 90 à 140 °C, pendant 15 à 90 minutes, de préférence 15 à 75 minutes.

14. Copolymère greffé B obtenu par un procédé selon l'une des revendications 1 à 13.

15. Procédé de préparation d'une masse de moulage thermoplastique - contenant au moins un copolymère greffé B selon la revendication 14, et au moins un copolymère vinylaromatique thermoplastique A, de préférence exempt de caoutchouc, en option au moins un autre composant polymère C choisi parmi les polycarbonates, les polyamides et les polyesters, et en option un ou plusieurs additifs et/ou adjuvants D - par mélange des composants, de préférence à l'état fondu.

16. Masse de moulage thermoplastique obtenue par un procédé selon la revendication 15.

17. Pièce moulée en une masse de moulage thermoplastique selon la revendication 16.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2015078751 A
- WO 2015000873 A
- WO 2020043690 A
- WO 2020020869 A
- WO 2020020831 A
- WO 03010214 A
- WO 20157165810 A1
- DE 1260135 A
- WO 2020020834 A1
- DE 1911882
- DE 3615607 A
- EP 0111260 A
- WO 200210222 A
- DE 2826925 A
- EP 022200 A
- DE 2714544 A
- DE 3000610 A
- DE 3832396 A
- DE 3077934 A

**In der Beschreibung aufgeführte Nicht-Patentliteratur**

- *Journal of Applied Polymer Science*, 1965, vol. 9, 2929-2938
- Kunststoff-Handbuch, Vieweg-Daumiller. Carl-Hanser-Verlag, 1969, vol. V, 122
- Plastics Additives Handbook. Hanser Verlag, 1996